# EUROPÄISCHE PATENTSCHRIFT

(11) **EP 3 782 773 B1**
(45) Veröffentlichungstag und Bekanntmachung des Hinweises auf die Patenterteilung: **13.11.2024**
(21) Anmeldenummer: 19193359.7
(22) Anmeldetag: 23.08.2019
(51) Int. Cl.: B25J 11/00, B25J 15/00, B25J 19/06, B25B 23/04

(54) **WERKZEUG FÜR EINEN KOLLABORIERENDEN ROBOTER, ROBOTER MIT DARAN BEFESTIGTEM WERKZEUG SOWIE KOLLISIONSSCHUTZVERFAHREN**
TOOL FOR A COLLABORATING ROBOT, ROBOT WITH TOOL FIXED TO SAME AND COLLISION PREVENTION METHOD
OUTIL POUR UN ROBOT COLLABORANT, ROBOT POURVU D'OUTIL FIXÉ AUDIT ROBOT AINSI QUE PROCÉDÉ DE PROTECTION CONTRE LA COLLISION

(43) Veröffentlichungstag der Anmeldung: 24.02.2021
(73) Patentinhaber: ZKW Group GmbH, 3250 Wieselburg (AT)
(72) Erfinder: Blamauer, Christian, 3345 Göstling an der Ybbs (AT); Schöbinger, Michael, 3151 Sankt Georgen (AT)
(74) Vertreter: Patentanwaltskanzlei Matschnig & Forsthuber OG

(56) Entgegenhaltungen:
- DE-A1- 102004 026 488
- DE-A1- 102013 020 138
- DE-A1- 102015 226 205
- US-A- 4 573 271

## Beschreibung

Die Erfindung betrifft ein Werkzeug für einen kollaborierenden Roboter. Weiters wird im Rahmen der Erfindung ein kollaborierender Roboter mit einem beweglichen Roboterarm angegeben, an dessen freiem Ende an einer Werkzeugaufnahme ein Werkzeug gemäß der Erfindung befestigt ist. Überdies betrifft die Erfindung ein Kollisionsschutzverfahren zum sicheren Abschalten bei Kollisionskontakt eines kollaborierenden Roboters mit einem daran befestigten Werkzeug gemäß der Erfindung.

Die Automatisierung von Montagetätigkeiten schreitet sehr schnell voran und wird zukünftig einen noch höheren Stellenwert haben. Einerseits gilt es, durch Automatisierungsmaßnahmen die Effizienz von diversen Montagearbeiten zu verbessern und andererseits eine immer schnellere sowie möglichst fehlerfreie Assemblierung von zu montierenden Komponenten zu erreichen. Zunehmend werden Arbeitsplätze geschaffen, bei denen Roboter und Menschen als Bedienpersonal im gleichen Arbeitsraum am gleichen Arbeitsplatz am selben Werkstück zusammenarbeiten.

Aus dem Stand der Technik sind bereits zahlreiche Ausführungen von Überlast- und Kollisionsschutzvorrichtungen für einen Roboter bekannt, die meist zwischen dem Roboter und einem vom Roboter zu verwendenden Werkzeug, das an einer Werkzeugaufnahme des Roboters befestigt ist, angeordnet sind, um Beschädigungen zu verhindern, wenn das Werkzeug auf ein Hindernis trifft. Beispielsweise sind aus den Dokumenten DE 199 25 688 A1, DE 103 91 972 T5 und DE 36 05 505 A1 bereits verschiedene Ausführungsformen von Überlast- Schutzeinrichtungen bekannt.

Die DE 10 2013 020138 A1 zeigt ein Werkzeug, insbesondere für einen Roboter zum automatischen Durchführen eines Arbeitsschritts, mit einem Arbeitsorgan, über welches ein Zusammenwirken des Werkzeugs mit wenigstens einem korrespondierenden Bauelement bewirkbar ist.

Aus der DE 10 2004 026488 A1 ist eine Rückführeinrichtung für einen Handhabungsautomaten bekannt, mit der ein am Handhabungsautomaten angeordnetes Werkzeug, insbesondere ein Schweißwerkzeug, bei Kollision des Werkzeuges mit einem Kollisionsobjekt in seine relative Ausgangsposition gegenüber einem Referenzpunkt des Handhabungsautomaten rückholbar ist.

Die DE 10 2015 226205 A1 offenbart eine Schutzeinrichtung für eine Manipulationseinrichtung an einer Handhabungseinrichtung.

Die US 4 573 271 A zeigt einen Sensor zum Überwachen von Operationen, die von einem Manipulator ausgeführt werden.

Aus dem Dokument DE 10 2017 217 882 A2 ist eine Kollisionsschutzvorrichtung für einen Roboter bzw. ein damit ausgestatteter Roboter bekannt. Diese Kollisionsschutzvorrichtung weist einen ersten Hauptkörper auf, der an einem Antriebsteil des Roboters angebracht wird. Weiters ist bei der Kollisionsschutzvorrichtung ein zweiter Hauptkörper vorgesehen, der zur Kopplung mit einem Endeffektor des Roboters ausgebildet ist. Der Endeffektor ist insbesondere als Greifer ausgebildet. Der zweite Hauptkörper ist bezüglich des ersten Hauptkörpers durch über Federmittel verfügende Vorspannmittel nachgiebig in eine Grundstellung vorgespannt, aus der er durch externe Kraft- und/oder Drehmomenteinwirkung entgegen einer Vorspannkraft der Vorspannmittel auslenkbar ist. Um bei einer Mensch-Maschine-Kollaboration eine Reduzierung des Verletzungsrisikos für den Menschen zu bewirken, ist bei dieser Kollisionsschutzvorrichtung vorgesehen, dass die Vorspannmittel zusätzlich zu den Federmitteln über Unterdruckmittel verfügen, die einen Unterdruck hervorrufen, aus dem eine mit der Wirkrichtung der Federmittel gleichgerichtete Unterdruckkraft resultiert und denen eine Auslöseeinrichtung zugeordnet ist, durch die ein Aufheben des Unterdruckes hervorrufbar ist, wenn der zweite Hauptkörper aufgrund einer auf ihn einwirkenden externen Auslösekraft aus der Grundstellung ausgelenkt wird.

Es wird hier also eine kombinierte Vorspannkraft erzeugt in Folge der Überlagerung von einer durch die Federmittel erzeugten Federkraft sowie der zusätzlichen, gleichgerichteten Unterdruckkraft, die durch die Unterdruckmittel hervorgerufen wird. Den Unterdruckmitteln ist eine Auslöseeinrichtung zugeordnet, die den Unterdruck aufhebt, wenn der zweite Hauptkörper bei der Kollision mit einer Person ausgelenkt wird.

Weiters ist in der DE 10 2017 217 882 A2 ein Roboter angegeben, der eine in dem vorgenannten Sinne ausgebildete Kollisionsschutzvorrichtung aufweist, wobei das Antriebsteil an dem ersten Hauptkörper und der Endeffektor bzw. Greifer an dem zweiten Hauptkörper der Kollisionsschutzvorrichtung angeordnet ist.

Nachteilig an dieser Ausführung ist zumindest, dass im Falle einer Kollision mit einer Person zwar die Unterdruckkraft entfällt, jedoch die durch die Federmittel erzeugte Federkraft sowie eine Reibungskraft weiterhin als Vorspannkraft der möglicherweise nach wie vor anstehenden Auslösekraft, die durch den anhaltenden Kollisionskontakt mit einem Menschen verursacht ist, entgegen wirken. Mit anderen Worten wird bei der aus DE 10 2017 217 882 A2 bekanntgewordenen Vorrichtung im Kollisionsfall mit einer Person zwar die anstehende Vorspannkraft zwischen dem Robotergreifarm und dem entsprechenden menschlichen Körperteil durch Wegfall der Unterdruckkraft verringert, eine verringerte Vorspannkraft aufgrund der jeweils voreingestellten Federkraft sowie der wirkenden Reibungskraft bleibt dennoch während des anhaltenden Kollisionskontakts weiterhin aufrecht. Für den Fall, dass die voreingestellte Federkraft zu hoch eingestellt ist oder sich die eingestellte Federkraft während des Betriebs des Roboters verstellt hat, so können auch in diesem Fall zu hohe Vorspannkräfte einwirken. Das Kollisionsobjekt bzw. der Mensch wird somit im Kollisionsfall nachteilig einer im Vergleich zur Auslösekraft größeren Gegenkraft ausgesetzt als vorgesehen bzw. als erlaubt. Da die Kollisionskraft von mehreren Faktoren wie dem Dämpfungsverhalten und Schmerzempfinden der getroffenen Körperstelle sowie dem Kollisionspunkt am Robotergehäuse abhängt und unter anderem auch stark abhängig von der Gegenmasse ist, kann auch diese Kollisionsschutzvorrichtung bei einer Mensch-Maschine-Kollaboration nachteilig zu nicht tolerierbaren Verletzungen des betreffenden Menschen führen.

Weiters ist aus der DE 10 2017 218 229 A1 eine Schutzvorrichtung für einen Industrieroboter bekannt geworden, die als Schutzhülle zumindest einen Außenwandabschnitt des Roboters umgibt. Die außenseitige Schutzhülle besteht aus Formteilen aus Kunststoff, die eine elektrisch leitfähige Leitschicht aufweisen, wobei im Kollisionsfall bei Berührung des Roboters mit einem Hindernis wie beispielsweise einem Menschen mittels entsprechender Sensorik eine Notabschaltung des Roboters ausgelöst wird. Die Sensorik detektiert im Kollisionsfall die Änderung des elektrischen Widerstands infolge eines elektrischen Potentialausgleichs zwischen dem Hindernis und der Leitschicht. Nachteilig an dieser Schutzvorrichtung ist zumindest, dass die außenseitige Schutzhülle nur die beweglichen Teile des Roboters, also beispielsweise die Gelenkarmteile eines Gelenkarmroboters, schützt. Eine Werkzeugaufnahme, die üblicherweise am vorderen, freien Ende des Gelenkarmroboters angeordnet ist und die zur Halterung und Führung eines beliebigen Werkzeugs dient, bleibt bewusst von der Schutzhülle ausgespart. Das bedeutet jedoch, dass mit dieser Schutzvorrichtung all jene besonders gefährlichen Kollisionen, die direkt zwischen einem an der Werkzeugaufnahme des Roboters befestigten Werkzeug und dem Hindernis bzw. dem Menschen auftreten, von der Schutzhülle überhaupt nicht erfasst werden können. Überdies funktioniert diese Schutzvorrichtung nur dann, wenn das Hindernis bzw. eine Person gegenüber dem elektrischen Potential der elektrisch leitfähigen Leitschicht nicht elektrisch isoliert ist.

Die Schutzvorrichtung gemäß der DE 10 2017 218 229 A1 ist daher für kollaborierende Roboteranwendungen, bei denen von einem Industrieroboter üblicherweise auch zumindest ein Werkzeug geführt und betätigt wird, aufgrund der dafür unzureichenden Sicherungsmaßnahmen nicht geeignet.

Generell umfassen kollaborierende Roboteranwendungen nur solche Anwendungen, bei denen Mensch und Maschine ohne den Gebrauch weiterer Schutzvorrichtungen direkt neben- oder miteinander arbeiten. Die Erfordernisse für die sicherheitsgerichtete Überwachung solcher kollaborierender Roboteranwendungen sind entsprechend streng und in einer Vielzahl an Regelwerken festgelegt. So sind für die Planung, Auslegung und den Betrieb von kollaborierenden Roboteranwendungen eine Vielzahl von Normen und Regelwerken zu beachten. Beispielsweise sind dazu die Maschinenrichtlinie 2006/42/EG der Europäischen Kommission in ihrer jeweils aktuellsten Form sowie Normen wie beispielsweise die sicherheitsspezifische Norm EN ISO 13849, welche sich mit sicherheitsbezogenen Teilen von Steuerungen beschäftigt, und auch die Norm EN ISO 10218 betreffend Sicherheitsanforderungen von Industrierobotern zu berücksichtigen. Weiters aktualisiert die Technische Spezifikation ISO TS 15066 die gültige Norm für Industrieroboter um den aktuellen Stand der Technik hinsichtlich die Handlungssicherheit in der Mensch-Roboter-Kollaboration (MRK).

In der Norm EN ISO 13849 werden Sicherheitsanforderungen und ein Leitfaden für die Gestaltung und Integration sicherheitsbezogener Teile von Steuerungen von Maschinen bereitgestellt einschließlich der Entwicklung von Software. Es werden dabei Eigenschaften jener Teile festgelegt, die zur Ausführung der entsprechenden Sicherheitsfunktionen erforderlich sind. Weiters wird darin ein mögliches Verfahren zur Bestimmung der erforderlichen Risikoreduzierung durch den entsprechenden Einsatz von Sicherheitsfunktionen bei Steuerungen beschrieben. Das Maß der Risikoreduzierung wird dabei als Performance Level (PL) beschrieben, wobei der Performance Level PL derzeit in fünf Stufen (beginnend bei der untersten Stufe PL = a bis zur höchsten Stufe PL = e) unterteilt ist.

Der Performance Level (PL) ist ein Wert, der die Fähigkeit von sicherheitsbezogenen Teilen von Steuerungen beschreibt, unter vorhersehbaren Bedingungen eine Sicherheitsfunktion auszuführen.

Als vordefinierter Zielwert für jede Sicherheitsfunktion wird der erforderliche Performance Level (required performance level; PLr) verwendet, der auf den folgenden drei Parametern basiert, nämlich der Schwere der möglichen Verletzung, der Häufigkeit und Dauer der Gefährdungsexposition sowie der Möglichkeit der Gefährdungsvermeidung, für jede einzelne Sicherheitsfunktion die erforderliche Risikominderung zu erzielen. Demnach muss der Performance Level (PL) von sicherheitsbezogenen Teilen in einer Steuerung größer oder gleich dem erforderlichen Performance Level (PLr) sein. Beispielsweise ist für die zweithöchste Sicherheitsfunktion gemäß Performance Level d (PL = d) derzeit festgelegt, dass die Wahrscheinlichkeit eines gefahrbringenden Ausfalls pro Stunde von 0,00001% bis 0,0001 % (von 10⁻⁷ bis 10⁻⁶) ist.

Nach Kenntnisstand der Erfinder ist aufgrund der in der aktuellen Technischen Spezifikation ISO TS 15066 festgelegten, maximal zulässigen Werte für die Kraft- und Druckeinwirkung (siehe das Körperzonenmodell gemäß Anhang A der ISO TS 15066) bei der Mensch-Roboter-Kollaboration (MRK) es mit herkömmlichen Kollisionsschutzvorrichtungen nicht möglich, ein Werkzeug, insbesondere ein Schraubwerkzeug, für kollaborierende Anwendungen einzusetzen, welches zumindest die Kriterien für die zweithöchste Sicherheitsfunktion gemäß Performance Level d (EN ISO 13849) erfüllt und dessen Einsatz eine entsprechend geringe Verletzungs- und Unfallgefahr für den mit dem entsprechenden Roboter zusammenarbeitenden Menschen gewährleistet.

Die vorliegende Erfindung stellt sich daher die Aufgabe, die aus dem Stand der Technik bekannten Nachteile von Kollisionsschutzvorrichtungen auf dem Gebiet der kollaborativen Robotik zu überwinden und ein Werkzeug mit einer verbesserten Kollisionsschutzeinrichtung zur Befestigung an einer Werkzeugaufnahme eines Robotergreifarms anzugeben, welches die vorstehend genannten Sicherheitskriterien der Mensch-Roboter-Kollaboration erfüllt und mit dem eine sicherheitsgerichtete Überwachung eines kollaborierenden Industrieroboters gewährleistet ist. Eine weitere erfindungsgemäße Aufgabe besteht darin, einen kollaborierenden Roboter, der mit einem erfindungsgemäßen Werkzeug ausgestattet ist, anzugeben, der die vorgenannten Sicherheitskriterien erfüllt.

Weiters ist es Aufgabe der vorliegenden Erfindung, ein Kollisionsschutzverfahren für den Werkzeugeinsatz eines kollaborierenden Industrieroboters anzugeben, welches die vorstehend genannten Sicherheitskriterien der Mensch-Roboter-Kollaboration erfüllt.

Erfindungsgemäß wird diese Aufgabe bei einem gattungsgemäßen Werkzeug durch die im kennzeichnenden Teil des Patentanspruchs 1 angegebenen Merkmale gelöst. Vorteilhafte Ausgestaltungen und Fortbildungen der Erfindung sind in den Unteransprüchen und der Beschreibung dargelegt.

Gemäß der Erfindung umfasst ein Werkzeug für einen kollaborierenden Roboter:
- ein Werkzeuggehäuse;
- einen Roboterflansch zur Befestigung des Werkzeugs an einer Werkzeugaufnahme des Roboters;
- einen Werkzeugantrieb;
- einen Werkzeugeinsatzhalter zur Aufnahme eines wechselbaren Werkzeugeinsatzes;
- einen Werkzeugeinsatz, der am Werkzeugeinsatzhalter befestigbar ist;
- eine verdrehgesicherte Antriebswelle zur Übertragung eines Antriebsdrehmoments vom Werkzeugantrieb auf den Werkzeugeinsatzhalter samt Werkzeugeinsatz, wobei
- die Antriebswelle während der Drehbewegung zur Übertragung des Antriebsdrehmoments in ihrer Achsenrichtung verschiebbar gelagert ist; wobei
- der Werkzeugeinsatzhalter samt Werkzeugeinsatz mittels der Antriebswelle mit dem Werkzeugantrieb bewegungsmäßig gekoppelt sowie in Achsenrichtung um eine Hublänge zwischen einer zurückgezogenen Grundposition und einer ausgefahrenen Arbeitsposition des Werkzeugeinsatzhalters beweglich verschiebbar gelagert ist;
- eine Kollisionsschutzeinrichtung mit einer 2-Kanal-Überwachung mit einem ersten und einem zweiten Positionserfassungsmittel, die mit einer Speicherprogrammierbaren Steuerungseinrichtung signalmäßig verbunden ist;
- eine Kollisionsschutzhülle, welche an einem freien Ende des Werkzeugs koaxial zur Achsenrichtung des Werkzeugeinsatzes angeordnet ist und innerhalb der sich der Werkzeugeinsatz in der Grundposition des Werkzeugeinsatzhalters befindet; wobei
- die Kollisionsschutzhülle beweglich in Bezug zum Werkzeuggehäuse gelagert sowie mit einem in Achsenrichtung verschiebbar gelagerten Stößel bewegungsmäßig gekoppelt ist; wobei
- bei einem Kollisionskontakt mit der Kollisionsschutzhülle eine Lageänderung des Stößels in Achsenrichtung von zumindest einem der zwei Positionserfassungsmittel erfassbar ist und die Kollisionsschutzeinrichtung dazu eingerichtet ist, bei einer Lageänderung des Stößels ein Werkzeug-Stillsetzmittel zum Stillsetzen des Werkzeugantriebs zu aktivieren, wobei der Werkzeugeinsatzhalter in seine Grundposition zurückfährt und sich der Werkzeugeinsatz in dieser Grundposition innerhalb der Kollisionsschutzhülle befindet.

Vorteilhaft ist bei dem erfindungsgemäßen Werkzeug die Kollisionsschutzeinrichtung in das Werkzeug integriert und die beiden Positionserfassungsmittel, die für eine 2-Kanal-Überwachung der Lageänderungen der Kollisionsschutzhülle bzw. des mit der Kollisionsschutzhülle bewegungsmäßig gekoppelten Stößels vorgesehen sind, befinden sich vom Werkzeuggehäuse vor äußerlichen Beschädigungen geschützt im Inneren des Werkzeugs.

Die verdrehgesicherte Antriebswelle überträgt das Antriebsdrehmoment vom Werkzeugantrieb auf den Werkzeugeinsatzhalter, der vorzugsweise als Adapter ausgeführt ist und an dem je nach Aufgabenstellung des Werkzeugs unterschiedliche Werkzeugeinsätze befestigt werden können. Während dieser Drehbewegung können eine Antriebswellenhülse und die Antriebswelle mit nur geringer Reibungskraft in axialer Richtung verschoben werden. Eine solche verdrehgesicherte Antriebswelle bietet den Vorteil, dass der mit der Antriebswelle bewegungsmäßig gekoppelte Werkzeugeinsatzhalter samt dem daran befestigten bzw. aufgesteckten Werkzeugeinsatz auch während einer Drehbewegung bzw. während der Drehmomentenübertragung in axialer Richtung der Antriebswelle verfahren werden kann. Dazu kann der Werkzeugeinsatzhalter samt dem daran befestigten Werkzeugeinsatz in Achsenrichtung der Antriebswelle bzw. des dazu koaxial angeordneten Werkzeugeinsatzes um eine Hublänge zwischen einer Grundposition und einer Arbeitsposition des Werkzeugeinsatzhalters verfahren werden. In der zurückgezogenen Grundposition befindet sich der jeweilige Werkzeugeinsatz, beispielsweise ein Schraubbit, ein Bohrer oder ein Fräser, gesichert innerhalb der Kollisionsschutzhülle, welche koaxial zum Werkzeugeinsatz angeordnet ist und diesen außenseitig umgibt. Der Werkzeugeinsatz kann in dieser zurückgezogenen Grundposition nicht berührt werden, weshalb mögliche Verletzungen infolge von Kontakt mit dem Werkzeugeinsatz ausgeschlossen sind.

Im Einsatzfall des Werkzeugs, um je nach Aufgabenstellung und gerade befestigtem Werkzeugeinsatz beispielsweise an einem Werkstück eine Schraube einzudrehen, ein Bohrloch zu bohren oder aber einen Abschnitt des Werkstücks auszufräsen, wird der Werkzeugeinsatzhalter samt dem daran befestigten Werkzeugeinsatz von der Grundposition um eine Hublänge in seine Arbeitsposition verfahren. Das Werkzeug ist dazu vorzugsweise an einer Werkzeugaufnahme eines kollaborierenden Roboters befestigt, kann aber auch beispielsweise an einem Stativ an einem Arbeitsplatz in einem Abstand oberhalb des zu bearbeitenden Werkstücks befestigt sein.

In der Arbeitsposition befindet sich die Kollisionsschutzhülle möglichst nahe an der Oberfläche des zu bearbeitenden Werkstücks oder liegt direkt an der Oberfläche des betreffenden Werkstücks an. Die Kollisionsschutzhülle ist so gestaltet, dass auch in der Arbeitsposition, wenn am freien Ende des Werkzeugs der jeweilige Werkzeugeinsatz oder beispielsweise bei einem Schrauber eine Schraube aus der Kollisionsschutzhülle hervortritt und in Kontakt mit dem zu bearbeitenden Werkstück kommt, die Kollisionsschutzhülle möglichst vor direktem Kontakt schützt.

Zweckmäßig wird dabei der Vorschub des Werkzeugeinsatzes, also die Hublänge zwischen der Grundposition und der ausgefahrenen Arbeitsposition des Werkzeugeinsatzhalters bzw. des daran befestigten Werkzeugeinsatzes, von der Speicherprogrammierbaren Steuerungseinrichtung anhand von vordefinierten Abmessungen des Werkstücks und/oder anhand von Daten entsprechend weiterer Positionserfassungsmittel wie beispielsweise von Lichtschranken oder Näherungsschaltern gesteuert. Für den Vorschub des Werkzeugeinsatzes in Achsenrichtung ist ein entsprechendes Zusammenwirken von axialem Ausgleich der verdrehgesicherten Antriebswelle sowie einem Hubantrieb, beispielsweise einem Pneumatik-Antrieb zum Verfahren des Werkzeugeinsatzhalters um eine Hublänge in Achsenrichtung verstanden. Zweckmäßig kann dazu der Werkzeugeinsatzhalter an einem Hubschlitten befestigt sein, der mittels einer oder mehrerer Führungsschienen vom Hubantrieb den Werkzeugeinsatzhalter zwischen einer Grundposition und einer Arbeitsposition in Achsenrichtung verfährt.

Der Stößel dient der Weitergabe einer Positionsänderung der Kollisionsschutzhülle bei einem Kollisionskontakt an die Positionserfassungsmittel der Kollisionsschutzeinrichtung. Wird die Kollisionsschutzhülle in seitlicher Richtung und/oder in axialer Richtung ausgelenkt so wird der Stößel in axialer Richtung verschoben, was von der Kollisionsschutzeinrichtung erfasst wird.

Zweckmäßigerweise braucht das mechanische Auslenken der Kollisionsschutzhülle und des Stößels nicht quittiert zu werden. Nach Entfall einer externen Krafteinwirkung bei Kollision, wenn also der mechanische Kollisionskontakt wegfällt, bewegt sich der Stößel aufgrund einer integrierten Feder selbstständig in seine Ausgangslage zurück.

Eine 2-Kanal-Überwachung ist zur Erfüllung der vorgenannten Sicherheitsanforderungen notwendig und gemäß den Vorgaben von Performance Level d (PL = d) vorgeschrieben. Um den vorhandenen geringen Bauraum innerhalb des Werkzeuggehäuses optimal zu nutzen, sind zwei separate Positionserfassungsmittel zur Lageerfassung des Stößels vorgesehen. Die beiden Positionserfassungsmittel können beispielsweise induktive Näherungsschalter, kapazitive Näherungsschalter, magnetische Näherungsschalter, optische Näherungsschalter, Lichtschranken oder Ultraschall-Näherungsschalter sein, die mit einer Speicherprogrammierbaren Steuerungseinrichtung signalmäßig verbunden sind.

Die beiden Positionserfassungsmittel müssen bei einer Lageänderung des Stößels infolge eines Kollisionskontakts mit der Kollisionsschutzhülle innerhalb einer im Steuerungsprogramm hinterlegten, vorgegebenen Zeitdifferenz gemeinsam jeweils das Steuerungssignal von Logisch 1 auf Logisch 0 oder umgekehrt wechseln. Im Normalbetrieb sind beide Positionserfassungsmittel auf Logisch 1. Würde nun eines der beiden Positionserfassungsmittel einen Fehler haben und beim Auslenken der Kollisionsschutzhülle bzw. des Stößels nicht auf Logisch 0 wechseln, so löst das andere Positionserfassungsmittel ein Werkzeug-Stillsetzmittel aus und der Werkzeugantrieb stoppt. Es wird somit durch den möglichen Ausfall eines der beiden Positionserfassungsmittel vorteilhaft die Sicherheitsfunktion nicht unwirksam.

Speicherprogrammierbare Steuerungseinrichtungen (SPS) sind dem Fachmann auf dem Gebiet der Automatisierungstechnik hinlänglich bekannt. Gemäß Eintrag auf Wikipedia (siehe https://de.wikipedia.org/wiki/Speicherprogrammierbare_Steuerung) hat eine Speicherprogrammierbare Steuerungseinrichtung im einfachsten Fall Eingänge, Ausgänge, ein Betriebssystem und eine Schnittstelle, über die ein Anwenderprogramm geladen werden kann. Das Anwenderprogramm legt fest, wie die Ausgänge in Abhängigkeit von den Eingängen geschaltet werden sollen. Das Betriebssystem stellt dabei sicher, dass dem Anwenderprogramm immer aktuelle Echt-Zeit-Informationen zur Verfügung stehen. Anhand dieser Informationen kann das Anwenderprogramm die Ausgänge so schalten, dass die Maschine oder die Anlage in der gewünschten Weise funktioniert.

Die Anbindung der SPS an die Maschine bzw. Anlage erfolgt mit Sensoren und Aktoren. Hinzu kommen Statusanzeigen. Die Sensoren sind an die Eingänge der SPS geschaltet und vermitteln der SPS das Geschehen in der Maschine oder Anlage. Beispiele für Sensoren sind z. B. Taster, Lichtschranken, Inkrementalgeber, Endschalter, oder auch Temperaturfühler, Füllstandsensoren etc. Die Aktoren sind an den Ausgängen der SPS angeschlossen und bieten die Möglichkeit, die Maschine oder Anlage zu steuern. Beispiele für Aktoren sind Schütze zum Einschalten von Elektromotoren, elektrische Ventile für Hydraulik oder Druckluft, aber auch Module für Antriebssteuerungen (Motion Control, Drehzahlsteuerung mit kontrollierter Beschleunigung oder Verzögerung, Schrittmotorsteuerungen).

Eine SPS kann in sehr verschiedener Weise realisiert sein, z. B. als Einzelgerät ("Baugruppe"), als PC-Einsteckkarte, als Softwareemulation etc. Weit verbreitet sind modulare Lösungen, bei denen die SPS aus einzelnen Steckmodulen (ebenfalls als Baugruppen bezeichnet) zusammengesetzt wird. Das Thema Antriebssteuerung (Motion Control, Drehzahlsteuerung mit kontrollierter Beschleunigung oder Verzögerung) wird zunehmend mit der SPS verbunden.

Einzelgeräte bieten Vorteile bei der Miniaturisierung und sind für kleinere Automatisierungsaufgaben preiswerter. Ein modularer Aufbau bietet die typischen Vorteile eines Baukastensystems: Hohe Flexibilität, Erweiterbarkeit, in größeren Anlagen Kostenersparnis durch die Verwendung vieler gleicher Module, die in großen Stückzahlen hergestellt werden können. Derzeitige SPS-Baugruppen übernehmen neben ihrer Kernaufgabe der Steuerung und Regelung zunehmend auch weitere Aufgaben: Visualisierung (Gestaltung der Schnittstelle Mensch-Maschine), Alarmierung und Aufzeichnung aller Betriebsmeldungen (Data-Logging).

Ebenfalls erfolgt zunehmend die Verbindung der Sensoren und Aktoren mit der SPS über einen Feldbus und nicht mehr diskret. Hierdurch verringert sich der Verdrahtungsaufwand. Seit einiger Zeit werden auch nicht nur Sensoren und Aktoren, sondern Teile der SPS wie Eingangs- und Ausgangsbaugruppen über einen Bus und (Bus-)Interfacemodule an eine Zentralstation angebunden (dezentrale Peripherie). Die Bussysteme werden in modernen Anlagen von Netzwerken (Profi-Net) abgelöst oder durch diese ergänzt. Gegenüber Bussystemen sind Netzwerke (Ethernet) flexibler und schneller.

Schließlich erfolgt auch zunehmend eine Anbindung an die Verwaltungsrechner einer Firma (vertikale Integration). So stehen z. B. immer aktuelle Daten über Fertigungsstände, Lagerbestände etc. zur Verfügung ("vernetzte Fabrik"). So wird der Unterschied zwischen einer modernen SPS und einem Prozessleitsystem immer kleiner.

Die Kombination aus der im Werkzeug integrierten Kollisionsschutzeinrichtung, gepaart mit einen Werkzeugeinsatzhalter, der sich bei Kollisionskontakt vom Kollisionsort um eine Hublänge aus der Arbeitsposition in eine gesicherte Grundposition, die vom Kollisionsort entfernt ist, zurückzieht, gewährleistet die Erfüllung der eingangs genannten Sicherheitskriterien für eine Mensch-Roboter-Kollaboration.

Erfindungsgemäß ist zur Wiederaufnahme des Werkzeugantriebs bei aktiviertem Werkzeug-Stillsetzmittel ein Werkzeug-Freisetzmittel zur Störungsquittierung vorgesehen, wobei das Werkzeug-Freisetzmittel von einer Person betätigbar ist. Vorteilhaft ist das erfindungsgemäße Werkzeug in dieser Ausführung mit einem Sicherheitssystem ausgerüstet, welches bei einer Störung beispielsweise in Folge eines Kollisionskontakts mit einer Bedienungsperson das Werkzeug automatisch stillsetzt. Um diese Störung zu quittieren und das Stillsetzmittel, welches mit der Werkzeugsteuerung (SPS) zusammenwirkt, zu deaktivieren, ist ein Freisetzmittel vorgesehen. Dieses Freisetzmittel wirkt ebenfalls mit der Werkzeugsteuerung zusammen und dient einerseits dazu, das Stillsetzmittel zu deaktivieren und das angehaltene Werkzeug wieder zu aktivieren. Das Werkzeug-Freisetzmittel muss dazu von der Bedienungsperson betätigt werden. Üblicherweise dient dazu ein Quittierungsschalter oder Quittierungsdruckknopf, der ebenfalls mit der Werkzeugsteuerung (SPS) zusammenwirkt und vorteilhaft etwas außerhalb des direkten Arbeitsbereichs des Werkzeugs bzw. der Bedienungsperson angeordnet ist, um ein irrtümliches Quittieren der Störung und damit zu frühes Aktivieren des Werkzeugs zu verhindern.

Besonders vorteilhaft kann es sein, wenn bei einem erfindungsgemäßen Werkzeug das erste Positionserfassungsmittel und das zweite Positionserfassungsmittel dazu eingerichtet sind, simultan und redundant eine Lageänderung des Stößels in Achsenrichtung zu erfassen, wobei für den Fall, wenn die Lageänderung des Stößels nur von einem der beiden Positionserfassungsmittel detektiert wird, von der Speicherprogrammierbaren Steuerungseinrichtung ein Werkzeug-Freisetzmittel zur Störungsquittierung blockiert wird, bis eine Störung der Kollisionsschutzeinrichtung behoben ist.

Wie vorhin bereits ausgeführt müssen die beiden Positionserfassungsmittel bei einer Lageänderung des Stößels infolge eines Kollisionskontakts mit der Kollisionsschutzhülle innerhalb einer im Steuerungsprogramm hinterlegten, vorgegebenen Zeitdifferenz gemeinsam jeweils das Steuerungssignal von Logisch 1 auf Logisch 0 oder umgekehrt wechseln. Im Normalbetrieb sind beide Positionserfassungsmittel auf Logisch 1. Dauert dieses gemeinsame Umschalten des ersten sowie des zweiten Positionserfassungsmittels länger als vorgesehen bzw. als erlaubt, so ist davon auszugehen, dass eines der beiden Positionserfassungsmittel einen Fehler hat und beim Auslenken der Kollisionsschutzhülle bzw. des Stößels nicht auf Logisch 0 wechselt. Vorteilhaft löst in so einem Störungsfall zwar das andere Positionserfassungsmittel ein Werkzeug-Stillsetzmittel aus und der Werkzeugantrieb stoppt. Allerdings ist in dieser vorteilhaften und besonders sicheren Ausführungsform der Erfindung vorgesehen, dass die Störung erst dann quittiert werden kann, wenn zuvor die Ursache für diese Störung behoben wurde und beispielsweise ein defektes Positionserfassungsmittel getauscht wurde.

Besonders robust und kompakt kann ein Werkzeug gemäß der Erfindung gestaltet sein, wenn die beiden Positionserfassungsmittel der Kollisionsschutzeinrichtung ein erster Überwachungssensor, vorzugsweise ein erster induktiver Überwachungssensor, und ein zweiter Überwachungssensor, vorzugsweise ein zweiter induktiver Überwachungssensor, sind.

Überwachungssensoren sind technische Bauteile, die bestimmte Eigenschaften ihrer Umgebung qualitativ oder als Messgröße quantitativ erfassen können. Diese Größen werden in ein weiterverarbeitbares elektrisches Signal umgeformt. Überwachungssensoren spielen als Signalgeber bei automatisierten Prozessen eine wichtige Rolle. Die von ihnen erfassten Werte oder Zustände werden üblicherweise in einer zugehörigen Steuerung verarbeitet, die entsprechende weitere Schritte auslöst.

Induktive Überwachungssensoren arbeiten grundsätzlich mit einer Induktivität, es wird ein Magnetfeld erzeugt und ein vom Sensor erfasstes Objekt verändert das Magnetfeld, sobald es in den Nahebereich des Sensors gelangt. Durch dieses Messprinzip lassen sich berührungslos und verschleißfrei Winkel, Wege bzw. Abstände und Geschwindigkeiten von Objekten messen.

Bei einem Werkzeug gemäß der Erfindung kann der Werkzeugeinsatz ausgewählt sein aus der Gruppe bestehend aus: Schrauberbit, Bohrer, Fräser.

Unter einem Schrauberbit als Werkzeug versteht man eine auswechselbare Schraubendreherklinge ohne Griff für ein bestimmtes Schraubenkopfprofil. Die Aufnahme ist so geformt, dass man es in einen entsprechend genormten Werkzeugeinsatzhalter, einen sogenannten Bithalter, einsetzen kann. Der Antriebsstrang zwischen dem Schrauberbit und einem Werkzeugantrieb erfordert immer einen dazwischen angeordneten Werkzeugeinsatzhalter.

In einer besonders zweckmäßigen Ausführung der Erfindung kann das Werkzeug ein Zuführschrauberwerkzeug sein mit einem Schrauberbit als Werkzeugeinsatz, wobei die Kollisionsschutzhülle in Form eines Backenmundstücks mit zumindest zwei Backen ausgestaltet ist, wobei die Backen mit Backenfedern an einem Auslenkkörper federnd gelagert befestigt sind und der Auslenkkörper mit einem Förderschlauch zur Zufuhr einzelner Schrauben zum Backenmundstück verbunden ist.

Bei einem Zuführschrauberwerkzeug können die Schrauben als Schüttgut in eine Zuführeinrichtung, beispielsweise einen Förderschlauch, aufgegeben und lagerichtig bereitgestellt werden. Die vereinzelte Schraube kann beispielsweise pneumatisch durch den Förderschlauch zum Backenmundstück der Schraubeinheit transportiert werden. Dort fällt die Schraube in das Backenmundstück und wird von gefedert gelagerten Backen des Backenmundstücks in seiner Lage gehalten. Anschließend wird die Schraubendreherklinge des Schrauberbits so weit nach unten gefahren, bis dieses in den Schraubenkopf eingreift. Der Auslenkkörper führt dabei die Auslenkbewegung des Backenmundstücks durch und senkt das Backenmundstück ab. Vorteilhaft ist der Auslenkkörper - etwa vergleichbar mit einem menschlichen Auge - sphärisch beweglich gelagert und kann erforderlichenfalls beispielsweise bei einem Kollisionskontakt mit dem Backenmundstück auch seitliche Auslenkbewegungen vollführen. Im Zusammenwirken mit dem Backenmundstück werden vom Auslenkkörper auch seitliche Auslenkbewegungen der Kollisionsschutzhülle abgefedert bzw. ermöglicht.

Nun beginnt der Schraubvorgang, bei dem das Schraubwerkzeug durch den Antriebssatz angetrieben rotiert und gleichzeitig durch den Auslenkkörper als Vorschub nach unten gepresst wird. Sobald die Schraube in Eingriff mit einem vorbereiteten Bohrloch bzw. einer Gewindebohrung eines Werkstücks steht und in diese Gewindebohrung eingeschraubt ist, wird das Backenmundstück danach geöffnet und gibt den Schraubenkopf frei.

Wenn die eingestellte Einschraubtiefe und das Abschaltdrehmoment erreicht sind, stoppt die Dreh- und Vorschubbewegung der Schraubendreherklinge des Schrauberbits. Das Schraubwerkzeug und der Auslenkkörper werden nach oben in die Grundposition des Werkzeugeinsatzhalters zurückgefahren und der nächste Schraubzyklus kann beginnen. Falls beispielsweise das vorgegebene Abschaltdrehmoment bereits vor dem Erreichen der Einschraubtiefe überschritten wird oder dieses in der Endposition nicht erreicht wird, kann von der Steuerung des Zuführschrauberwerkzeugs eine Fehlermeldung in Form einer NIO-Meldung (NIO bedeutet "nicht in Ordnung" bzw. "not in order") herausgegeben werden. Mittels geeigneter Kontroll- und Überwachungseinrichtungen können während des Einschraubens das Niveau des Werkstückes ebenso wie die Abmessungen des Schraubenkopfes erfasst werden. Für den Fall, dass ein erfasster Schraubenspalt gegen Null geht und die Schraubkurve aus Drehmoment und Drehwinkel den voreingestellten Steuerungsbedingungen ist, dann ist auch die Wahrscheinlichkeit einer Fehlverschraubung gering bzw. vernachlässigbar.

Das Backenmundstück dient zur Führung der Schrauben zur Einschraubstelle am Werkstück. Das Backenmundstück weist zumindest zwei oder mehrere Backen auf, welche zueinander gefedert ausgeführt sind. Die Schraube wird durch die Backen in Position gehalten. Wird der Schraubvorgang ausgelöst drückt der Schrauberbit die Schraube nach unten. Durch die Überfederung öffnet das Backenmundstück und die Schraube wird ausgestoßen.

In einer vorteilhaften Weiterbildung dieser Ausführung kann bei einem erfindungsgemäßen Werkzeug in Form eines Zuführschrauberwerkzeugs der Schrauberbit dazu eingerichtet sein, bei Auslösung eines Schraubvorgangs eine Schraube in Achsenrichtung innerhalb des Backenmundstücks zum freien Ende des Werkzeugs zu drücken, wobei die Backen dazu eingerichtet sind, die Schraube an ihrem Schraubenkopf sowie an ihrem Schraubenschaft federnd zu halten, bis die Schraube in einem Werkstück eingeschraubt ist und die Backen des Backenmundstücks den Schraubenkopf freigeben. Der Schrauberbit drückt an der jeweiligen einzuschraubenden Schraube an und drückt anschließend die Backen des Backenmundstücks auseinander, sodass der Schraubenkopf aus den Backen in Achsenrichtung nach unten heraustritt. Anschließend sind die Backen wieder im geschlossenen Zustand, der Schrauberbit steht aber noch im Eingriff mit dem Schraubenkopf. Abschließend muss nun noch der Schrauberbit zurückgezogen werden.

Erfindungsgemäß werden die eingangs genannten Aufgaben auch mit einem kollaborierender Roboter gelöst, der einen beweglichen Roboterarm aufweist, und an dem an einer Werkzeugaufnahme ein erfindungsgemäßes Werkzeug befestigt ist, wobei die Kollisionsschutzeinrichtung des Werkzeugs mit einer Speicherprogrammierbaren Steuerungseinrichtung des Roboters signalmäßig verbunden ist und wobei bei einem Kollisionskontakt mit der Kollisionsschutzhülle des Werkzeugs die Werkzeugaufnahme des Roboters von einer Arbeitsposition in eine vom Ort des Kollisionskontakts weiter entfernte Störungsposition ausweicht. Vorteilhaft wird bei einem Kollisionskontakt mit dem Werkzeug nicht nur das Werkzeug sofort abgestellt, sondern zusätzlich wird das Werkzeug vom Roboterarm von der Arbeitsposition in der Nähe eines Werkstücks in eine Störungsposition verfahren, die vom Ort des Kollisionskontakts entfernt ist. Somit wird eine Gefährdung der Bedienungsperson beim Kollisionskontakt mit dem Werkzeug möglichst verhindert.

Besonders zweckmäßig kann es sein, wenn der kollaborierende Roboter nach einem Kollisionskontakt mit der Kollisionsschutzhülle des Werkzeugs in seiner vom Ort des Kollisionskontakts weiter entfernten Störungsposition verbleibt. Dies hat den Vorteil, dass nach einem Kollisionskontakt der Roboter das Werkzeug solange in der vom Arbeitsplatz entfernten Störungsposition verschwenkt hält, bis die Störung nachweislich behoben ist. Dies kann zweckmäßig beispielsweise durch eine Störungsquittierung erfolgen, die von der Bedienungsperson durchzuführen ist als Bestätigung, dass der Kollisionskontakt zu keinen Verletzungen des Bedienungspersonal bzw. zu keinen Beschädigungen des Werkzeugs und/oder des kollaborierenden Roboters geführt hat. Erst nach der Störungsquittierung wird der Betrieb des Roboters bzw. des daran befestigten Werkzeugs wieder aufgenommen.

In einer weiteren vorteilhaften Ausführung der Erfindung kann bei einem kollaborierenden Roboter die Speicherprogrammierbare Steuerungseinrichtung des Werkzeugs mit der Speicherprogrammierbaren Steuerungseinrichtung des Roboters zusammenwirken und vorzugsweise in diese integriert sein. Besonders bevorzugt sind in dieser Variante Steuerungseinrichtungen des Werkzeugs und des Roboters ineinander integriert, wonach mit einer Speicherprogrammierbaren Steuerungseinrichtung sowohl der Roboter, als auch das daran befestigte Werkzeug gesteuert werden können. Dies bietet neben einer weiter erhöhten Betriebssicherheit überdies auch Kostenvorteile.

Erfindungsgemäß ist zur Wiederaufnahme des Betriebs des Roboters ein Roboter-Freisetzmittel zur Störungsquittierung vorgesehen, wobei das Roboter-Freisetzmittel von einer Person betätigbar ist.

Zweckmäßigerweise kann bei einem kollaborierenden Roboter gemäß der Erfindung vorgesehen sein, dass die Speicherprogrammierbare Steuerungseinrichtung des Werkzeugs und/oder die Speicherprogrammierbare Steuerungseinrichtung des Roboters die Funktionstüchtigkeit des ersten und des zweiten Positionserfassungsmittels sowie die Funktionstüchtigkeit der 2-Kanal-Überwachung der Kollisionsschutzeinrichtung regelmäßig überprüft. Das automatische Testen der Positionserfassungsmittel erhöht die Betriebssicherheit und es kann bereits frühzeitig erkannt werden, falls Positionserfassungsmittel bzw. Sensoren ausgetauscht werden müssen.

Von Vorteil kann sein, wenn bei einem erfindungsgemäßen kollaborierenden Roboter bei einer Störung der Kollisionsschutzeinrichtung des Werkzeugs das Roboter-Freisetzmittel zur Störungsquittierung blockiert wird, bis die Störung der Kollisionsschutzeinrichtung behoben ist.

Die eingangs genannten erfindungsgemäßen Aufgabe werden auch von einem Kollisionsschutzverfahren zum sicheren Abschalten bei Kollisionskontakt eines an einem kollaborativen Arbeitsplatz gesteuert bewegbaren kollaborierenden Roboters mit einem an einer Werkzeugaufnahme eines beweglichen Roboterarms des Roboters befestigten Werkzeugs gelöst, welches Kollisionsschutzverfahren die folgenden Schritte umfasst:
- Erfassen eines Kollisionskontakts mit einer Kollisionsschutzhülle, welche an einem freien Ende des Werkzeugs koaxial zur Achsenrichtung eines Werkzeugeinsatzes angeordnet ist und die beweglich in Bezug zu einem Werkzeuggehäuse gelagert sowie mit einem in Achsenrichtung verschiebbar gelagerten Stößel bewegungsmäßig gekoppelt ist;
- Mechanisches Übertragen der durch den Kollisionskontakt bewirkten Auslenkbewegung der Kollisionsschutzhülle in eine Lageänderung in Achsenrichtung des Stößels;
- Erkennen der Lageänderung des Stößels durch zumindest eines von zwei Positionserfassungsmittel einer Kollisionsschutzeinrichtung;
- Aktivieren eines Werkzeug-Stillsetzmittels zum Stillsetzen des Werkzeugantriebs durch die Kollisionsschutzeinrichtung, wobei ein Werkzeugeinsatzhalter in seine Grundposition zurückgefahren wird und sich der Werkzeugeinsatz in dieser Grundposition innerhalb der Kollisionsschutzhülle befindet;
- Ausweichen der Werkzeugaufnahme des Roboters samt dem daran befestigten Werkzeug von einer Arbeitsposition in eine vom Ort des Kollisionskontakts weiter entfernte Störungsposition.

Erfindungsgemäß ist vorgesehen, dass nach einem Kollisionskontakt mit der Kollisionsschutzhülle des Werkzeugs der Roboter in seiner vom Ort des Kollisionskontakts weiter entfernten Störungsposition so lange verbleibt, bis zur Wiederaufnahme des Betriebs des Roboters ein Roboter-Freisetzmittel zur Störungsquittierung betätigt wird.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- **Fig. 1** in einer isometrischen Ansicht von der Seite ein erfindungsgemäßes Werkzeug in Form eines Zuführschrauberwerkzeugs;
- **Fig. 2** in einer isometrischen Ansicht ein Detail des in Fig. 1 gezeigten Werkzeugs mit abgenommenem Gehäuse;
- **Fig. 3** in einer Detailansicht von vorne das freie Ende des in Fig. 1 gezeigten Werkzeugs mit einer Kollisionsschutzhülle;
- **Fig. 4** in einer teilweisen Schnittansicht von vorne das freie Ende des in Fig. 3 gezeigten Werkzeugs;
- **Fig. 4A** ein Detail aus Fig. 4;
- **Fig. 5** in einer Detailansicht von Fig. 4 die Kollisionsschutzhülle des Werkzeugs während eines axialen Kollisionskontakts;
- **Fig. 6** in einer Detailansicht von Fig. 4 die Kollisionsschutzhülle des Werkzeugs während eines seitlichen Kollisionskontakts;
- **Die** **Figuren 7A bis 7E** jeweils in teilweisen Schnittansichten von vorne eine Abfolge der bei einem Kollisionskontakt mit der Kollisionsschutzhülle ausgelösten Lageänderungen der Werkzeugbauteile;
- **Fig. 8** in einem vereinfachten Mess- und Regel-Fließbild den Ablauf der Steuerung und Regelung im Betrieb eines erfindungsgemäßen Werkzeugs, das an einem Roboter gemäß der in Fig. 9 veranschaulichten Anordnung befestigt ist;
- **Fig. 9** in einer isometrischen Ansicht von der Seite einen kollaborativen Arbeitsplatz, an dem ein Roboter mit einem daran befestigten Werkzeug gemäß der Erfindung gemeinsam mit einer Person zusammenarbeitet;
- **Fig. 10** zeigt einen Ausschnitt der Anordnung gemäß Fig. 9, wobei aufgrund eines Kollisionskontakts der Person mit der Kollisionsschutzhülle am Werkzeug sowohl das Werkzeug, als auch der Roboter jeweils stillgesetzt sind.

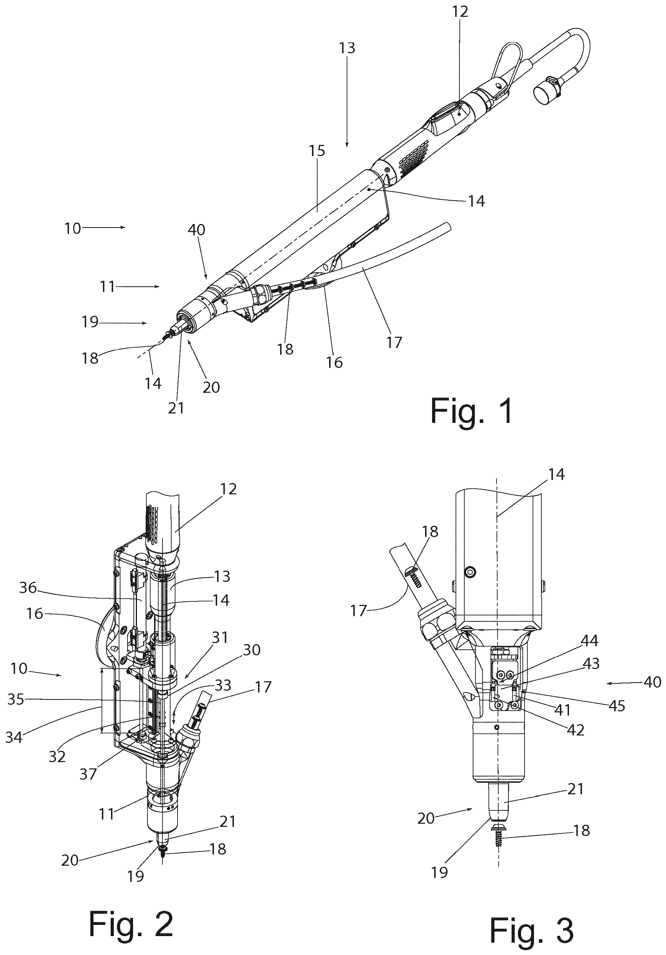

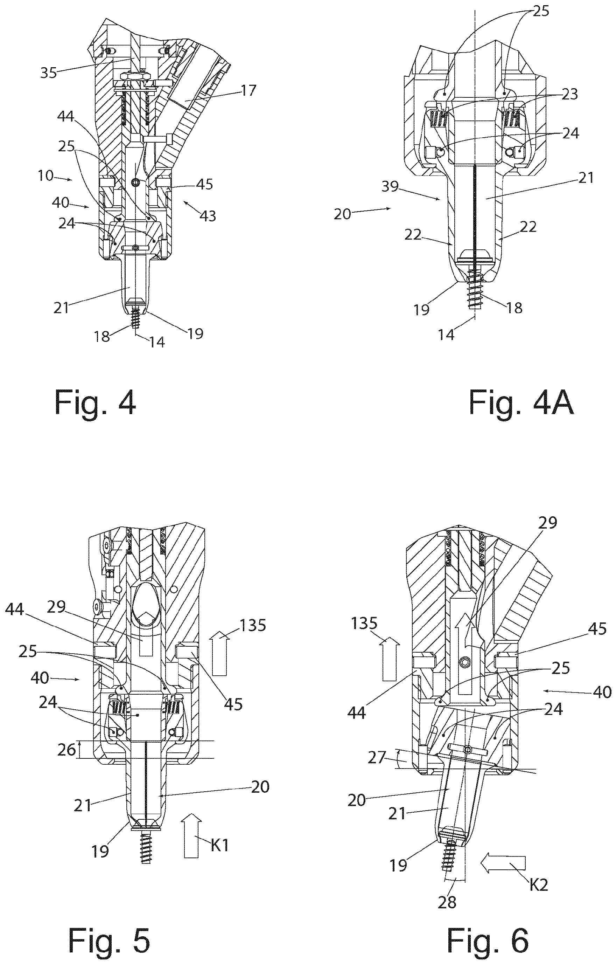

Die **Figuren 1 bis 3** zeigen ein erfindungsgemäßes Werkzeug 10 in Form eines Zuführschrauberwerkzeugs 11. Das Werkzeug 10 weist einen Werkzeugantrieb 12 mit einer verdrehgesicherten Antriebswelle 13 auf, wobei die Achsenrichtung 14 der Antriebswelle 13 auch der Achsenrichtung 14 des Werkzeuggehäuse 15 bzw. der Einhausung des Werkzeugs entspricht. Das Werkzeuggehäuse 15 weist einen Roboterflansch 16 auf, der zur Verbindung mit einem hier nicht dargestellten Robotergreifarm vorgesehen ist. In einem Förderschlauch 17 werden pneumatisch vereinzelte Schrauben 18 seitlich dem freien Ende 19 des Werkzeugs 10 zugeführt. Eine Kollisionsschutzhülle 20 ist am freien Ende 19 des Werkzeugs 10 koaxial zur Achsenrichtung 14 angeordnet. Die Kollisionsschutzhülle 20 ist hier bei einem Zuführschrauberwerkzeug 11 als Backenmundstück 21 ausgestaltet, wobei zwei oder mehrere Backen 22 des Backenmundstückes 21 mittels Backenfedern 23 federnd an einem Auslenkkörper 24 gelagert sind. Dies ist in den Schnittansichten von **Fig. 4** bzw. von **Fig. 4A** im Detail veranschaulicht. Die Kollisionsschutzhülle 20 ist beweglich in Bezug zum Werkzeuggehäuse 15 gelagert und mittels des Auslenkkörpers 24 mit einem in Achsenrichtung 14 verschiebbar gelagerten Stößel 25 bewegungsmäßig gekoppelt.

Eine Schraube 18 fällt aus dem Förderschlauch 17 in das Backenmundstück 21 und wird von den gefedert gelagerten Backen 22 des Backenmundstücks 21 in seiner Lage gehalten. Anschließend wird ein Werkzeugeinsatzhalter 30 bzw. Bithalter samt einem wechselbaren Werkzeugeinsatz 35, der hier als Schrauberbit mit einer Schraubendreherklinge ausgeführt ist, so weit in Achsenrichtung 14 nach unten gefahren, bis der Werkzeugeinsatz 35 in den Schraubenkopf der Schraube 18 eingreift. Der Auslenkkörper 24 führt dabei die Auslenkbewegung des Backenmundstücks 21 durch und senkt das Backenmundstück 21 ab. Vorteilhaft ist der Auslenkkörper 24 - etwa vergleichbar mit einem menschlichen Auge - sphärisch beweglich gelagert und kann erforderlichenfalls beispielsweise bei einem Kollisionskontakt von außen mit der Kollisionsschutzhülle 20 bzw. mit dem Backenmundstück 21 auch seitliche Auslenkbewegungen vollführen. Im Zusammenwirken mit dem Backenmundstück 21 werden vom Auslenkkörper 24 auch seitliche Auslenkbewegungen der Kollisionsschutzhülle abgefedert bzw. ermöglicht.

Wie in **Fig. 2** im Detail gezeigt wird dient die verdrehgesicherte Antriebswelle 13 zur Übertragung eines Antriebsdrehmoments vom Werkzeugantrieb 12 auf den Werkzeugeinsatzhalter 30 samt dem damit verbundenen Werkzeugeinsatz 35 in Form des hier ausgestalteten Schrauberbits 39.

Im Falle der hier nicht explizit veranschaulichten Ausführung des Werkzeugs als Bohrerwerkzeug wäre der Werkzeugeinsatz entsprechend als auswechselbarer Bohrer, im Falle eines Fräswerkzeugs als entsprechender Fräser ausgeführt.

Der Werkzeugeinsatzhalter 30 samt dem daran angeordneten Werkzeugeinsatz 35 ist mittels der Antriebswelle 13 mit dem Werkzeugantrieb 12 bewegungsmäßig gekoppelt und ist weiters in Achsenrichtung 14 um eine Hublänge 34 zwischen einer zurückgezogenen Grundposition 31 und einer in Fig. 2 strichliert angedeuteten, in Achsenrichtung 14 nach unten ausgefahrenen Arbeitsposition 32 des Werkzeugeinsatzhalters 30 beweglich verschiebbar ist, wie mit einem Doppelpfeil 33 symbolisiert ist. Als Antrieb für den Hubantrieb 36 dient hier beispielsweise ein Pneumatikantrieb. Der Hubantrieb 36 des Werkzeugeinsatzhalters 30 erfolgt entlang einer Führungsschiene 37.

**Fig. 5** zeigt die Kollisionsschutzhülle 20 des Werkzeugs 10 während eines axialen Kollisionskontakts von außen, der durch den Pfeil K1 symbolisiert ist. Durch den Kollisionskontakt K1 mit der Kollisionsschutzhülle 20 wird aufgrund der axialen Auslenkung 26 des Backenmundstücks 21 in Pfeilrichtung 26 eine Lageänderung des mittels des dazwischenliegenden Auslenkkörpers 24 bewegungsmäßig gekoppelten Stößels 25 in Achsenrichtung 14 von zumindest einem von zwei Positionserfassungsmittel 41, 42 einer Kollisionsschutzeinrichtung 40 erfasst. Die Kollisionsschutzeinrichtung 40 ist dazu eingerichtet, bei einer Lageänderung des Stößels 25 ein Werkzeug-Stillsetzmittel zum Stillsetzen des Werkzeugantriebs 12 zu aktivieren, wobei der Werkzeugeinsatzhalter 30 in seine Grundposition 31 in Achsenrichtung 14 weg von der Kollisionsschutzhülle 20 zurückfährt und sich der Werkzeugeinsatz 35 in dieser Grundposition 31 innerhalb der Kollisionsschutzhülle 20 befindet. Die Lageänderung des Stößels 25 in Achsenrichtung 14 ist hier durch einen Pfeil 29 symbolisiert.

**Fig. 6** zeigt die Kollisionsschutzhülle 20 des Werkzeugs 10 während eines seitlichen Kollisionskontakts von außen, der durch den Pfeil K2 symbolisiert ist. Durch den seitlichen Kollisionskontakt K2 mit der Kollisionsschutzhülle 20 wird aufgrund der seitlichen Auslenkung 27 des Backenmundstücks 21 in Pfeilrichtung 27 eine Lageänderung des Backenmundstücks 21 auf den anschließenden Auslenkkörper 24 übertragen. Der sphärisch beweglich gelagerte Auslenkkörper 24 kann die seitliche Auslenkung 27 des Backenmundstücks 21 um einen Auslenkwinkel 28 in Bezug zur Achsenrichtung 14 ausgleichen und diese seitliche Auslenkbewegung an den nachfolgenden Stößel 25 in Form einer in Achsenrichtung 14 gerichteten axialen Auslenkbewegung des Stößels 25 übertragen. Die axiale Auslenkbewegung des Stößels 25 wird von zumindest einem von zwei Positionserfassungsmittel 41, 42 der Kollisionsschutzeinrichtung 40 erfasst. Die Kollisionsschutzeinrichtung 40 aktiviert bei einer Lageänderung des Stößels 25 ein Werkzeug-Stillsetzmittel zum Stillsetzen des Werkzeugantriebs 12, wobei der Werkzeugeinsatzhalter 30 in seine Grundposition 31 in Achsenrichtung 14 weg von der Kollisionsschutzhülle 20 zurückfährt und sich der Werkzeugeinsatz 35 in dieser Grundposition 31 innerhalb der Kollisionsschutzhülle 20 befindet. Die Lageänderung des Stößels 25 in Achsenrichtung 14 ist hier durch einen Pfeil 29 symbolisiert. In Zusammenwirken mit einem hier nicht dargestellten Roboterarm, an dem das Werkzeug 10 befestigt sein kann, kann im Fall einer Störung bzw. Kollision K1, K2 der Roboterarm samt dem Werkzeug 10 entsprechend aus dem Gefahrenbereich wegbewegt werden. Dies ist in den Figuren 5 und 6 jeweils durch einen Pfeil 135 angedeutet, der eine solche Ausweichrichtung eines Roboters bei Störung symbolisieren soll.

Die Positionserfassungsmittel 41, 42 der Kollisionsschutzeinrichtung 40 sind hier als 2-Kanal-Überwachung 43 ausgebildet, wobei das erste Positionserfassungsmittel 41 ein erster Überwachungssensor 44 und das zweite Positionserfassungsmittel 42 ein zweiter Überwachungssensor 45 ist. Die Kollisionsschutzeinrichtung 40 ist mittels Signalleitungen 46 mit einer Speicherprogrammierbaren Steuerungseinrichtung 50 verbunden.

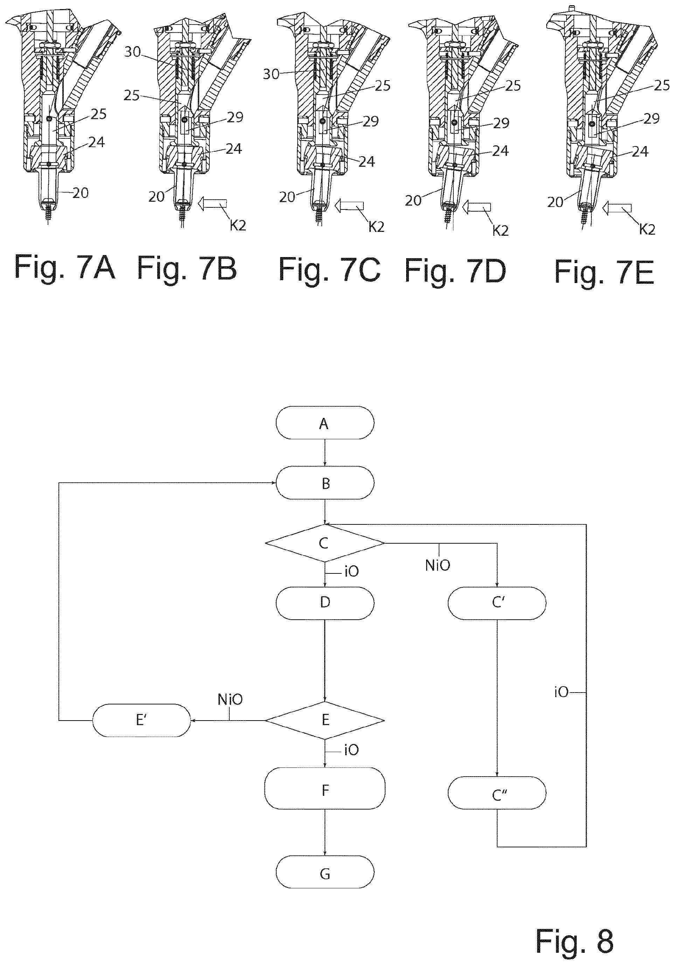

Die **Figuren 7A** bis **7E** zeigen eine Abfolge der bei einem Kollisionskontakt K2 von der Seite mit der Kollisionsschutzhülle 20 ausgelösten Lageänderungen der vorhin bereits genannten Werkzeugbauteile.

**Fig. 8** zeigt in einem vereinfachten Mess- und Regel-Fließbild den Ablauf der Steuerung und Regelung im Betrieb eines erfindungsgemäßen Werkzeugs in Form eines Zuführschraubers, das an einem Roboter befestigt ist.

Das Kästchen A symbolisiert dabei den ersten Schritt, wobei der Zuführschrauber in Richtung seiner Arbeitsposition nahe an einem Werkstück verfährt.

Das Kästchen B symbolisiert den Schritt des Zuführens einer Schraube aus dem Förderschlauch zum Backenmundstück.

Sofern gemäß Kästchen C das Werkzeug, das an einem Robotergreifarm befestigt ist, seine Endposition bzw. Arbeitsposition ohne Kollision erreicht, wird von einer Steuerungseinrichtung des Werkzeugs bzw. des Roboters das Signal "IO" ("in Ordnung") ausgegeben und es wird gemäß Kästchen D der Schraubprozess gestartet. Dabei wird der Bithalter pneumatisch in die Arbeitsposition bewegt. Die Steuerung des Zuführschrauberwerkzeugs startet danach mit einem vorprogrammierten Automatik-Ablauf zum Einschrauben der vorbereiten Schraube in einem Schraubloch des Werkstücks. Der Automatik-Ablauf wird beispielsweise anhand der Bewertungskriterien des Schrauberdrehmoments sowie des jeweiligen Auslenkwinkels des Schrauberbits gesteuert. Gemäß Kästchen E wird anschließend entschieden, ob der Automatik-Ablauf erfolgreich war.

Im Falle des Signals "IO" wird gemäß Kästchen F die Schraubeinheit in ihre Ausgangsstellung zurückgefahren, wobei innerhalb des Werkzeugs die Pneumatik zurückgestellt wird und der Werkzeugeinsatzhalter in seine Grundposition zurückgefahren wird. Im Backenmundstück befindet sich in dieser Position keine vorgelegte Schraube. Somit kann gemäß Kästchen G eine nächste Position zum Einschrauben einer nächsten Schraube am selben oder an einem folgenden Werkstück angefahren werden.

Sofern gemäß Kästchen C die Endposition nicht erreicht wird, wird von der Steuerungseinrichtung ein Störungssignal "NIO" ("nicht in Ordnung") ausgegeben und es wird gemäß Kästchen C' eine Kollision erkannt.

Bei einer Kollision (Kästchen C'), also beim Kontakt zwischen einem Gegenstand wie beispielsweise der Hand einer Bedienungsperson und der Kollisionsschutzhülle bzw. dem Backenmundstück wird der Bitvorschub gestoppt, der Stößel federt zurück und der Auslenkkörper weicht je nach Kontakt links, rechts oder nach oben aus. Der Stößel überträgt die Auslenkung ausgehend von einer räumlichen Drehbewegung und/oder Verschiebung des Auslenkkörpers in eine rein axiale Bewegung in Achsenrichtung des Werkzeugs. Die Sensorik der Kollisionsschutzeinrichtung erkennt die Lageänderung des Stößels. Die Änderung des Schaltzustandes der Positionserfassungsmittel bzw. Sensoren wird in der Speicherprogrammierbaren Steuerungseinrichtung (SPS) entsprechend verarbeitet und es wird eine entsprechende Störungsmeldung aufgrund der Kollision ausgegeben.

Das Kästchen C" symbolisiert die Reaktion des Kollisionsschutzverfahrens bzw. des kollaborierenden Roboters auf eine erkannte Kollision. Der Roboterarm fährt daraufhin aus seiner Arbeitsposition in einer Ausweichrichtung von der Kollisionsstelle weg in eine weiter entfernte Störungsposition, wobei gleichzeitig der Schraubvorgang abgebrochen und der Werkzeugantrieb gestoppt wird. Der Pneumatikantrieb im Werkzeug fährt den Werkzeugeinsatz in die Grundposition zurück, wobei sich der Werkzeugeinsatz in dieser Grundposition innerhalb der Kollisionsschutzhülle befindet.

Zur Wiederinbetriebnahme ist das händische Quittieren der Störungsmeldung durch die Bedienungsperson erforderlich. Erst wenn nach dem Quittieren von der SPS das Signal "IO" ("in Ordnung") ausgegeben wird, wird das Werkzeug vom Roboter erneut gemäß Kästchen C in seine Endposition bzw. Arbeitsposition nahe am Werkstück geführt.

Für den Fall, dass von der SPS gemäß Kästchen E erkannt wird, dass der Automatik-Ablauf nicht erfolgreich war und ein Störungssignal "NIO" ausgegeben wird, so wird gemäß Kästchen E' die möglicherweise defekte Schraube an einer definierten Stelle ausgestoßen bzw. verworfen. Der Programmablauf wird daraufhin neu gestartet und es wird gemäß Kästchen B eine neue Schraube zugeschossen.

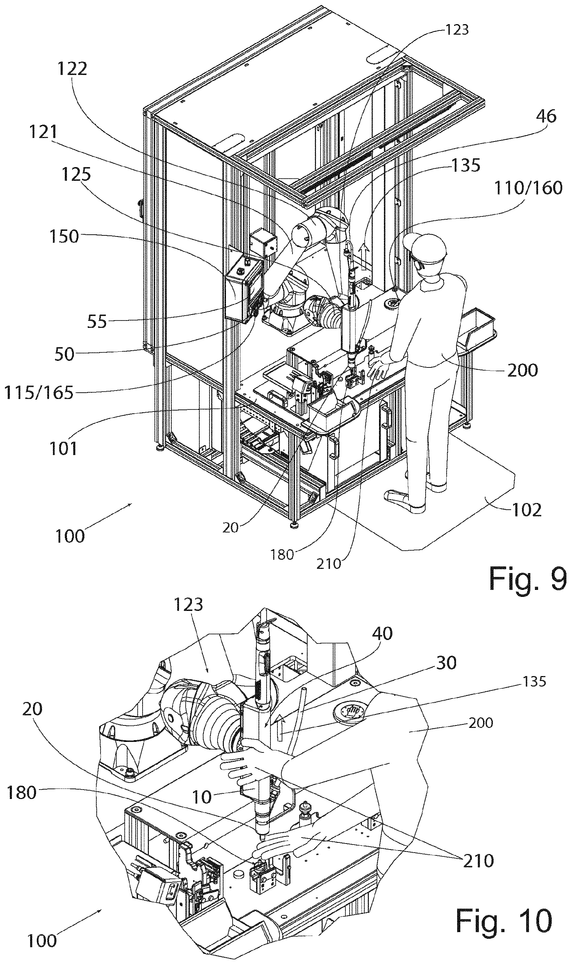

**Fig. 9** zeigt in einer isometrischen Ansicht von der Seite einen kollaborativen Arbeitsplatz 100, an dem ein Roboter 120 mit einem daran befestigten Werkzeug 10 gemäß der Erfindung gemeinsam mit einer Person 200 zusammenarbeitet.

Das Werkzeug 10 ist beispielsweise wiederum ein Zuführschrauberwerkzeug 11 gemäß der vorstehenden Beschreibung. Das Werkzeug 10 weist eine Kollisionsschutzhülle 20 auf. Kollisionen werden von einer Kollisionsschutzeinrichtung 40, die eine 2-Kanal-Überwachung 43 mit einem ersten und einem zweiten erster Überwachungssensor 44, 45 aufweist, erfasst. Die Kollisionsschutzeinrichtung 40 ist mittels einer oder mehrerer Signalleitungen 46 mit einer Speicherprogrammierbaren Steuerungseinrichtung (SPS) 50 des Werkzeugs 10 signalmäßig verbunden. Eine Steuerungsanzeige 55 dient zur möglichen Fehlererkennung bzw. zur Beurteilung des Status des Werkzeugs 10 für die Bedienungsperson 200.

Der kollaborative Arbeitsplatz 100 umfasst einen Arbeitstisch 101, eine Standfläche 102 sowie ein Werkzeug-Stillsetzmittel 110, beispielsweise einen Not-Aus-Schalter, sowie ein Werkzeug-Freisetzmittel 115, das beispielsweise in Form eines Schalters zur Störungsquittierung ausgestaltet ist.

Der Roboter 120 weist einen Roboterarm mit Roboterarmabschnitten 121, 122 auf, an deren freiem Ende 123 eine Werkzeugaufnahme 125 des Roboters 120 vorgesehen ist. An der Werkzeugaufnahme 125 ist das Werkzeug 10 mit seinem Roboterflansch 16 befestigt.

Das Werkzeug 10 kann vom Roboter 120 zwischen einer Arbeitsposition 130 des Roboterarms nahe an einem Werkstück 180 und einer Störungsposition 140 des Roboterarms in einer sicheren Entfernung vom Werkstück 180 verfahren werden. Eine Ausweichrichtung des Roboters bei einer Störung, wenn der Roboterarm samt dem daran befestigten Werkzeug 10 also von einer Arbeitsposition 130 in eine Störungsposition 140 verfährt, ist mit dem Pfeil 135 symbolisiert.

Die Speicherprogrammierbare Steuerungseinrichtung (SPS) 50 des Werkzeugs 10 ist hier zweckmäßig in die Speicherprogrammierbare Steuerungseinrichtung (SPS) 150 des Roboters 120 integriert. Das Werkzeug-Stillsetzmittel 110 ist hier mit einem Roboter-Stillsetzmittel 160 kombiniert. Auch bei Betätigung eines Not-Aus-Schalters, der beispielsweise an der Steuerungsanzeige 55 vorgesehen ist, können sowohl das Werkzeug 10, als auch der Roboter 120 händisch deaktiviert werden, woraufhin der Werkzeugantrieb gestoppt wird und der Werkzeugeinsatzhalter 30 in seine Grundposition 31 zurückfährt. Gleichzeitig verfährt der Roboterarm samt dem Werkzeug 10 in seine Störungsposition 140 außerhalb des Arbeitsbereichs bzw. vom Ort der Kollision entfernt.

Ebenso sind hier ein Werkzeug-Freisetzmittel 115 und ein Roboter-Freisetzmittel 165 miteinander kombiniert. Sobald von der Bedienungsperson ein entsprechender Schalter zur Störungsquittierung betätigt wird und von der SPS 150 keine Störungsmeldungen mehr erkannt werden, wird der Roboter 120 samt dem Werkzeug 10 wieder in Betrieb genommen.

**Fig. 10** zeigt einen Ausschnitt gemäß der Anordnung gemäß Fig. 9, wobei aufgrund eines Kollisionskontakts der Person 200 mit der Kollisionsschutzhülle 20 am Werkzeug 10 sowohl das Werkzeug 10, als auch der Roboter 120 stillgesetzt sind. Ein Körperteil 210 der Person 200, beispielsweise die Hand der Bedienungsperson, hat hier in Form eines axialen Kollisionskontakts K1 und/oder eines seitlichen Kollisionskontakts K2 mit dem Backenmundstück 21 des Werkzeugs 10 eine Lageänderung des Stößels 25 verursacht, woraufhin von der Kollisionsschutzeinrichtung 40 das Werkzeug-Stillsetzmittel 110 sowie das Roboter-Stillsetzmittel 160 aktiviert werden und der Roboter 120 samt dem Werkzeug 10 gestoppt bzw. in Pfeilrichtung 135 in die Störungsposition verfahren werden.

### LISTE DER BEZUGSZEICHEN

- 10: Werkzeug
- 11: Zuführschrauberwerkzeug
- 12: Werkzeugantrieb
- 13: verdrehgesicherte Antriebswelle
- 14: Achsenrichtung der Antriebswelle
- 15: Werkzeuggehäuse; Einhausung
- 16: Roboterflansch
- 17: Förderschlauch
- 18: Schraube
- 19: freies Ende des Werkzeugs
- 20: Kollisionsschutzhülle
- 21: Backenmundstück
- 22: Backen (Klingen) des Backenmundstückes
- 23: Backenfeder
- 24: Auslenkkörper
- 25: Stößel
- 26: axiale Auslenkung des Backenmundstücks (Pfeil)
- 27: seitliche Auslenkung des Backenmundstücks (Pfeil)
- 28: Auslenkwinkel
- 29: Lageänderung des Stößels in Achsenrichtung (Pfeil)
- 30: Werkzeugeinsatzhalter; Bithalter
- 31: Grundposition des Werkzeugeinsatzhalters; Bithalters
- 32: Arbeitsposition des Werkzeugeinsatzhalters; Bithalters
- 33: Hubrichtung des Werkzeugeinsatzhalters; Bithalters (Doppelpfeil)
- 34: Hublänge
- 35: wechselbarer Werkzeugeinsatz (Schrauberbit, Bohrer, Fräser)
- 36: Hubantrieb; Pneumatikantrieb
- 37: Führungsschiene
- 39: Schrauberbit
- 40: Kollisionsschutzeinrichtung
- 41: erstes Positionserfassungsmittel
- 42: zweites Positionserfassungsmittel
- 43: 2-Kanal-Überwachung
- 44: erster Überwachungssensor
- 45: zweiter Überwachungssensor

### LISTE DER BEZUGSZEICHEN (FORTSETZUNG)

- 46: Signalleitung
- 50: Speicherprogrammierbare Steuerungseinrichtung (SPS) des Werkzeugs
- 55: Steuerungsanzeige
- 100: Kollaborativer Arbeitsplatz
- 101: Arbeitstisch
- 102: Standfläche
- 110: Werkzeug-Stillsetzmittel; Not-Aus-Schalter
- 115: Werkzeug-Freisetzmittel; Schalter zu Störungsquittierung
- 120: Roboter
- 121: Roboterarmabschnitt
- 122: Roboterarmabschnitt
- 123: Freies Ende des Roboterarms
- 125: Werkzeugaufnahme des Roboters
- 130: Arbeitsposition des Roboterarms
- 135: Ausweichrichtung des Roboters bei Störung (Pfeil)
- 140: Störungsposition des Roboterarms
- 150: Speicherprogrammierbare Steuerungseinrichtung (SPS) des Roboters
- 160: Roboter-Stillsetzmittel; Not-Aus-Schalter
- 165: Roboter-Freisetzmittel; Schalter zu Störungsquittierung
- 180: Werkstück
- 200: Person
- 210: Körperteil der Person
- K1: (axialer) Kollisionskontakt mit Werkzeugmundstück (Pfeil)
- K2: (seitlicher) Kollisionskontakt mit Werkzeugmundstück (Pfeil)

## Patentansprüche

1. Werkzeug (10) für einen kollaborierenden Roboter (120), umfassend:
- ein Werkzeuggehäuse (15);
- einen Roboterflansch (16) zur Befestigung des Werkzeugs (10) an einer Werkzeugaufnahme (125) des Roboters (120);
- einen Werkzeugantrieb (12);
- einen Werkzeugeinsatzhalter (30) zur Aufnahme eines wechselbaren Werkzeugeinsatzes (35);
- einen Werkzeugeinsatz (35), der am Werkzeugeinsatzhalter (30) befestigbar ist;
- eine verdrehgesicherte Antriebswelle (13) zur Übertragung eines Antriebsdrehmoments vom Werkzeugantrieb (12) auf den Werkzeugeinsatzhalter (30) samt Werkzeugeinsatz (35), wobei die Antriebswelle (13) während der Drehbewegung zur Übertragung des Antriebsdrehmoments in ihrer Achsenrichtung (14) verschiebbar gelagert ist; wobei
- der Werkzeugeinsatzhalter (30) samt Werkzeugeinsatz (35) mittels der Antriebswelle (13) mit dem Werkzeugantrieb (12) bewegungsmäßig gekoppelt sowie in Achsenrichtung (14) um eine Hublänge (34) zwischen einer zurückgezogenen Grundposition (31) und einer ausgefahrenen Arbeitsposition (32) des Werkzeugeinsatzhalters (30) beweglich verschiebbar (33) gelagert ist;
- eine Kollisionsschutzeinrichtung mit einem Positionserfassungsmittel, die mit einer Steuerungseinrichtung signalmäßig verbunden ist;
- eine Kollisionsschutzhülle (20), welche an einem freien Ende (19) des Werkzeugs (10) koaxial zur Achsenrichtung (14) des Werkzeugeinsatzes (35) angeordnet ist und innerhalb der (20) sich der Werkzeugeinsatz (35) in der Grundposition (31) des Werkzeugeinsatzhalters (30) befindet; wobei
- die Kollisionsschutzhülle (20) beweglich in Bezug zum Werkzeuggehäuse (15) gelagert ist; wobei
- bei einem Kollisionskontakt (K1, K2) mit der Kollisionsschutzhülle (20) eine Lageänderung in Achsenrichtung (14) von dem Positionserfassungsmittel erfassbar ist und die Kollisionsschutzeinrichtung (40) dazu eingerichtet ist, bei einer Lageänderung ein Werkzeug-Stillsetzmittel (110) zum Stillsetzen des Werkzeugantriebs (12) zu aktivieren, wobei der Werkzeugeinsatzhalter (30) in seine Grundposition (31) zurückfährt und sich der Werkzeugeinsatz (35) in dieser Grundposition (31) innerhalb der Kollisionsschutzhülle (20) befindet,
**dadurch gekennzeichnet, dass**
- die Kollisionsschutzeinrichtung (40) mit einer 2-Kanal-Überwachung (43) mit einem ersten (41) und einem zweiten (42) Positionserfassungsmittel, die mit einer Speicherprogrammierbaren Steuerungseinrichtung (50) signalmäßig (46) verbunden ist;
- die Kollisionsschutzhülle (20) mit einem in Achsenrichtung (14) verschiebbar gelagerten Stößel (25) bewegungsmäßig gekoppelt ist; wobei
- bei einem Kollisionskontakt (K1, K2) mit der Kollisionsschutzhülle (20) eine Lageänderung des Stößels (25) von zumindest einem der zwei Positionserfassungsmittel (41, 42) erfassbar ist; sowie
- zur Wiederaufnahme des Werkzeugantriebs (12) bei aktiviertem Werkzeug-Stillsetzmittel (110) ein Werkzeug-Freisetzmittel (115) zur Störungsquittierung vorgesehen ist, wobei das Werkzeug-Freisetzmittel (115) von einer Person (200) betätigbar ist.

2. Werkzeug (10) nach Anspruch 1, **dadurch gekennzeichnet, dass** das erste Positionserfassungsmittel (41) und das zweite Positionserfassungsmittel (42) dazu eingerichtet sind, simultan und redundant eine Lageänderung des Stößels (25) in Achsenrichtung (14) zu erfassen, wobei für den Fall, wenn die Lageänderung des Stößels (25) nur von einem der beiden Positionserfassungsmittel (41, 42) detektiert wird, von der Speicherprogrammierbaren Steuerungseinrichtung (50) ein Werkzeug-Freisetzmittel (115) zur Störungsquittierung blockiert wird, bis eine Störung der Kollisionsschutzeinrichtung (40) behoben ist.

3. Werkzeug (10) nach einem der Ansprüche 1 oder 2, **dadurch gekennzeichnet, dass** die beiden Positionserfassungsmittel (41, 42) der Kollisionsschutzeinrichtung (40) ein erster Überwachungssensor (44), vorzugsweise ein erster induktiver Überwachungssensor (44), und ein zweiter Überwachungssensor (45), vorzugsweise ein zweiter induktiver Überwachungssensor (45), sind.

4. Werkzeug (10) nach einem der Ansprüche 1 bis 3, **dadurch gekennzeichnet, dass** der Werkzeugeinsatz (35) ausgewählt ist aus der Gruppe bestehend aus: Schrauberbit (39), Bohrer, Fräser.

5. Werkzeug (10) nach einem der Ansprüche 1 bis 4, **dadurch gekennzeichnet, dass** das Werkzeug (10) ein Zuführschrauberwerkzeug (11) ist mit einem Schrauberbit (39) als Werkzeugeinsatz (35), wobei die Kollisionsschutzhülle (20) in Form eines Backenmundstücks (21) mit zumindest zwei Backen (22) ausgestaltet ist, wobei die Backen (22) mit Backenfedern (23) an einem Auslenkkörper (24) federnd gelagert befestigt sind und der Auslenkkörper (24) mit einem Förderschlauch (17) zur Zufuhr einzelner Schrauben (18) zum Backenmundstück (21) verbunden ist.

6. Werkzeug (10) nach Anspruch 5, **dadurch gekennzeichnet, dass** der Schrauberbit (39) dazu eingerichtet ist, bei Auslösung eines Schraubvorgangs eine Schraube (18) in Achsenrichtung (14) innerhalb des Backenmundstücks (21) zum freien Ende (19) des Werkzeugs (10) zu drücken und die Backen (22) dazu eingerichtet sind, die Schraube (18) an ihrem Schraubenkopf sowie an ihrem Schraubenschaft federnd zu halten, bis die Schraube (18) in einem Werkstück (180) eingeschraubt ist und die Backen (22) des Backenmundstücks (21) den Schraubenkopf freigeben.

7. Kollaborierender Roboter (120) mit einem beweglichen Roboterarm (121, 122), sowie mit einem an einer Werkzeugaufnahme (125) befestigten Werkzeug (10) nach einem der Ansprüche 1 bis 6, wobei die Kollisionsschutzeinrichtung (40) des Werkzeugs (10) mit einer Speicherprogrammierbaren Steuerungseinrichtung (150) des Roboters (120) signalmäßig (46) verbunden ist und bei einem Kollisionskontakt (K1, K2) mit der Kollisionsschutzhülle (20) des Werkzeugs (10) die Werkzeugaufnahme (125) des Roboters (120) von einer Arbeitsposition (130) in eine vom Ort des Kollisionskontakts (K1, K2) weiter entfernte Störungsposition (140) ausweicht (135), **dadurch gekennzeichnet, dass** zur Wiederaufnahme des Betriebs des Roboters (120) ein Roboter-Freisetzmittel (165) zur Störungsquittierung vorgesehen ist, wobei das Roboter-Freisetzmittel (165) von einer Person (200) betätigbar ist.

8. Kollaborierender Roboter (120) nach Anspruch 7, **dadurch gekennzeichnet, dass** der Roboter (120) nach einem Kollisionskontakt (K1, K2) mit der Kollisionsschutzhülle (20) des Werkzeugs (10) in seiner vom Ort des Kollisionskontakts (K1, K2) weiter entfernten Störungsposition (140) verbleibt.

9. Kollaborierender Roboter (120) nach Anspruch 7 oder 8, **dadurch gekennzeichnet, dass** die Speicherprogrammierbare Steuerungseinrichtung (50) des Werkzeugs (10) mit der Speicherprogrammierbaren Steuerungseinrichtung (150) des Roboters (120) zusammenwirkt und vorzugsweise in diese (150) integriert ist.

10. Kollaborierender Roboter (120) nach einem der Ansprüche 7 bis 9, **dadurch gekennzeichnet, dass** die Speicherprogrammierbare Steuerungseinrichtung (50) des Werkzeugs (10) und/oder die Speicherprogrammierbare Steuerungseinrichtung (150) des Roboters (120) die Funktionstüchtigkeit des ersten (41) und des zweiten (42) Positionserfassungsmittels sowie der 2-Kanal-Überwachung (43) der Kollisionsschutzeinrichtung (40) regelmäßig überprüft.

11. Kollaborierender Roboter (120) nach einem der Ansprüche 7 bis 10, **dadurch gekennzeichnet, dass** bei einer Störung der Kollisionsschutzeinrichtung (40) des Werkzeugs (10) das Roboter-Freisetzmittel (165) zur Störungsquittierung blockiert wird, bis die Störung der Kollisionsschutzeinrichtung (40) behoben ist.

12. Kollisionsschutzverfahren zum sicheren Abschalten bei Kollisionskontakt eines an einem kollaborativen Arbeitsplatz (100) gesteuert bewegbaren kollaborierenden Roboters (120) nach einem der Ansprüche 7 bis 111, mit einem an einer Werkzeugaufnahme (125) eines beweglichen Roboterarms (121,122) des Roboters (120) befestigten Werkzeugs (10) nach einem der Ansprüche 1 bis 6, umfassend die folgende Schritte:
- Erfassen eines Kollisionskontakts (K1, K2) mit einer Kollisionsschutzhülle (20), welche an einem freien Ende (19) des Werkzeugs (10) koaxial zur Achsenrichtung (14) eines Werkzeugeinsatzes (35) angeordnet ist und die beweglich in Bezug zu einem Werkzeuggehäuse (15) gelagert sowie mit einem in Achsenrichtung (14) verschiebbar gelagerten Stößel (25) bewegungsmäßig gekoppelt ist;
- Mechanisches Übertragen der durch den Kollisionskontakt (K1, K2) bewirkten Auslenkbewegung der Kollisionsschutzhülle (20) in eine Lageänderung in Achsenrichtung (14) des Stößels (25);
- Erkennen der Lageänderung des Stößels (25) durch zumindest eines von zwei Positionserfassungsmittel (41, 42) einer Kollisionsschutzeinrichtung (40);
- Aktivieren eines Werkzeug-Stillsetzmittels (110) zum Stillsetzen des Werkzeugantriebs (12) durch die Kollisionsschutzeinrichtung (40), wobei ein Werkzeugeinsatzhalter (30) in seine Grundposition (31) zurückgefahren wird und sich der Werkzeugeinsatz (35) in dieser Grundposition (31) innerhalb der Kollisionsschutzhülle (20) befindet;
- Ausweichen (135) der Werkzeugaufnahme (125) des Roboters (120) samt dem daran befestigten Werkzeug (10) von einer Arbeitsposition (130) in eine vom Ort des Kollisionskontakts (K1, K2) weiter entfernte Störungsposition (140);
**dadurch gekennzeichnet, dass** nach einem Kollisionskontakt (K1, K2) mit der Kollisionsschutzhülle (20) des Werkzeugs (10) der Roboter (120) so lange in seiner vom Ort des Kollisionskontakts (K1, K2) weiter entfernten Störungsposition (140) verbleibt, bis zur Wiederaufnahme des Betriebs des Roboters (120) ein Roboter-Freisetzmittel (165) zur Störungsquittierung betätigt wird.

## Claims

1. Tool (10) for a collaborative robot (120), comprising
- a tool housing (15);
- a robot flange (16) for attaching the tool (10) to a tool holder (125) of the robot (120);
- a tool drive (12);
- a tool insert holder (30) for receiving an exchangeable tool insert (35);
- a tool insert (35) which can be fastened to the tool insert holder (30);
- a drive shaft (13) secured against rotation for transmitting a drive torque from the tool drive (12) to the tool insert holder (30) together with the tool insert (35), wherein the drive shaft (13) is mounted so as to be displaceable in its axial direction (14) during the rotary movement for transmitting the drive torque; wherein
- the tool insert holder (30) together with the tool insert (35) is movably coupled to the tool drive (12) by means of the drive shaft (13) and is mounted so as to be displaceable (33) in the axial direction (14) by a stroke length (34) between a retracted home position (31) and an extended working position (32) of the tool insert holder (30);
- a collision protection device with a position detection means, which is connected to a control device in a signaling manner;
- a collision protection cover (20) which is arranged at a free end (19) of the tool (10) coaxially to the axial direction (14) of the tool insert (35) and within which (20) the tool insert (35) is located in the basic position (31) of the tool insert holder (30); wherein
- the collision protection cover (20) is mounted movably in relation to the tool housing (15); wherein
- in the event of a collision contact (K1, K2) with the collision protection cover (20), a change in position in the axial direction (14) can be detected by the position detection means and the collision protection device (40) is set up to activate a tool stop setting means (110) for stopping the tool drive (12) in the event of a change in position, the tool insert holder (30) moving back into its basic position (31) and the tool insert (35) being located in this basic position (31) within the collision protection cover (20),
**characterized in that**
- the collision protection device (40) has a 2-channel monitoring system (43) with a first (41) and a second (42) position detection means, which is connected to a programmable logic controller (50) by means of signals (46);
- the collision protection cover (20) is coupled in terms of movement to a plunger (25) which is displaceably mounted in the axial direction (14); wherein
- in the event of collision contact (K1, K2) with the collision protection cover (20), a change in position of the ram (25) can be detected by at least one of the two position detection means (41, 42); and
- a tool-release means (115) is provided for resuming the tool drive (12) when the tool-stop-setting means (110) is activated for fault acknowledgement, wherein the tool-release means (115) can be actuated by a person (200).

2. Tool (10) according to claim 1, **characterized in that** the first position detecting means (41) and the second position detecting means (42) are set up to simultaneously and redundantly detect a change in position of the ram (25) in the axial direction (14), wherein, in the case if the change in position of the ram (25) is detected by only one of the two position detection means (41, 42), a tool release means (115) for fault acknowledgement is blocked by the programmable logic controller (50) until a fault of the collision protection device (40) is rectified.

3. Tool (10) according to one of claims 1 or 2, **characterized in that** the two position detecting means (41, 42) of the collision protection device (40) are a first monitoring sensor (44), preferably a first inductive monitoring sensor (44), and a second monitoring sensor (45), preferably a second inductive monitoring sensor (45).

4. Tool (10) according to one of claims 1 to 3, **characterized in that** the tool insert (35) is selected from the group consisting of: Screwdriver bit (39), drill bit, milling cutter.

5. Tool (10) according to one of claims 1 to 4, **characterized in that** the tool (10) is a feed screwdriver tool (11) with a screwdriver bit (39) as tool insert (35), wherein the collision protection sleeve (20) is designed in the form of a jaw mouthpiece (21) with at least two jaws (22), wherein the jaws (22) are resiliently mounted on a deflection body (24) by means of jaw springs (23) and the deflection body (24) is connected to a feed hose (17) for feeding individual screws (18) to the jaw mouthpiece (21).

6. Tool (10) according to claim 5, **characterized in that** the screwdriver bit (39) is set up to press a screw (18) in the axial direction (14) within the jaw mouthpiece (21) towards the free end (19) of the tool (10) when a screwing operation is triggered, and the jaws (22) are set up for this purpose, to hold the screw (18) resiliently at its screw head and at its screw shank until the screw (18) is screwed into a workpiece (180) and the jaws (22) of the jaw mouthpiece (21) release the screw head.

7. Collaborating robot (120) with a movable robot arm (121, 122), and with a tool (10) attached to a tool holder (125) according to one of claims 1 to 6, wherein the collision protection device (40) of the tool (10) is connected to a programmable logic controller (150) of the robot (120) by means of signals (46) and, in the event of collision contact (K1, K2) with the collision protection cover (20) of the tool (10), the tool holder (125) of the robot (120) moves away (135) from a working position (130) into a fault position (140) further away from the location of the collision contact (K1, K2), **characterized in that** a robot release means (165) for fault acknowledgement is provided for resuming the operation of the robot (120), the robot release means (165) being actuable by a person (200).

8. Collaborating robot (120) according to claim 7, **characterized in that** the robot (120) remains in its interference position (140) further away from the location of the collision contact (K1, K2) after a collision contact (K1, K2) with the collision protection cover (20) of the tool (10).

9. Collaborating robot (120) according to claim 7 or 8, **characterized in that** the programmable logic controller (50) of the tool (10) interacts with the programmable logic controller (150) of the robot (120) and is preferably integrated into the latter (150).

10. Collaborating robot (120) according to one of claims 7 to 9, **characterized in that** the programmable logic controller (50) of the tool (10) and/or the programmable logic controller (150) of the robot (120) regularly checks the functionality of the first (41) and the second (42) position detection means as well as the 2-channel monitoring (43) of the collision protection device (40).

11. Collaborating robot (120) according to any one of claims 7 to 10, **characterized in that**, in the event of a malfunction of the collision protection device (40) of the tool (10), the robot release means (165) for acknowledging the malfunction is blocked until the malfunction of the collision protection device (40) is eliminated.

12. Collision protection method for safely switching off in the event of collision contact of a collaborative robot (120) according to one of claims 7 to 11, which can be moved in a controlled manner at a collaborative workstation (100), with a tool (10) according to one of claims 1 to 6, which is attached to a tool holder (125) of a movable robot arm (121, 122) of the robot (120), comprising the following steps:
- detecting a collision contact (K1, K2) with a collision protection sleeve (20), which is arranged at a free end (19) of the tool (10) coaxially to the axis direction (14) of a tool insert (35) and which is movably mounted in relation to a tool housing (15) and is coupled in terms of movement to a plunger (25) mounted displaceably in the axis direction (14);
- mechanical transmission of the deflection movement of the collision protection cover (20) caused by the collision contact (K1, K2) into a change in position in the axial direction (14) of the plunger (25);
- detection of the change in position of the ram (25) by at least one of two position detection means (41, 42) of a collision protection device (40);
- activating a tool stop means (110) for stopping the tool drive (12) by the collision protection device (40), wherein a tool insert holder (30) is returned to its home position (31) and the tool insert (35) is located in this home position (31) within the collision protection sleeve (20);
- evasion (135) of the tool holder (125) of the robot (120) together with the tool (10) attached thereto from a working position (130) into an interference position (140) further away from the location of the collision contact (K1, K2);
**characterized in that** after a collision contact (K1, K2) with the collision protection cover (20) of the tool (10), the robot (120) remains in its interference position (140) further away from the location of the collision contact (K1, K2) until a robot release means (165) is actuated to acknowledge the interference in order to resume operation of the robot (120).

## Revendications

1. Outil (10) pour un robot collaborateur (120), comprenant :
- un boîtier d'outil (15) ;
- une bride de robot (16) pour fixer l'outil (10) à un porte-outil (125) du robot (120) ;
- un entraînement d'outil (12) ;
- un support d'insert d'outil (30) destiné à recevoir un insert d'outil interchangeable (35) ;
- un insert d'outil (35) qui peut être fixé au support d'insert d'outil (30) ;
- un arbre d'entraînement (13) bloqué en rotation pour la transmission d'un couple d'entraînement de l'entraînement d'outil (12) au support d'insert d'outil (30) avec l'insert d'outil (35), l'arbre d'entraînement (13) étant logé de manière déplaçable dans sa direction axiale (14) pendant le mouvement de rotation pour la transmission du couple d'entraînement ; où
- le support d'insert d'outil (30) avec l'insert d'outil (35) est couplé en mouvement à l'entraînement d'outil (12) au moyen de l'arbre d'entraînement (13) et est logé (33) de manière à pouvoir être déplacé dans la direction de l'axe (14) sur une longueur de course (34) entre une position de base (31) rétractée et une position de travail (32) sortie du support d'insert d'outil (30) ;
- un dispositif de protection contre les collisions avec un moyen de détection de position, qui est relié par signal à un dispositif de commande ;
- une enveloppe anti-collision (20) qui est disposée à une extrémité libre (19) de l'outil (10) coaxialement à la direction axiale (14) de l'insert d'outil (35) et à l'intérieur de laquelle (20) l'insert d'outil (35) se trouve dans la position de base (31) du support d'insert d'outil (30) ; où
- l'enveloppe anti-collision (20) est montée de manière mobile par rapport au boîtier d'outil (15) ; où
- lors d'un contact de collision (K1, K2) avec l'enveloppe de protection contre les collisions (20), un changement de position dans la direction axiale (14) peut être détecté par le moyen de détection de position et le dispositif de protection contre les collisions (40) est conçu pour activer, lors d'un changement de position, un moyen d'arrêt d'outil (110) pour arrêter l'entraînement d'outil (12), le support d'insert d'outil (30) revenant dans sa position de base (31) et l'insert d'outil (35) se trouvant dans cette position de base (31) à l'intérieur de l'enveloppe de protection contre les collisions (20),
**caractérisé en ce que**
- le dispositif anti-collision (40) avec un contrôle à deux canaux (43) avec un premier (41) et un deuxième (42) moyen de détection de position, qui est relié par signal (46) à un dispositif de commande programmable (50) ;
- l'enveloppe de protection contre les collisions (20) est couplée en mouvement à un coulisseau (25) logé de manière à pouvoir être déplacé dans la direction de l'axe (14) ; où
- lors d'un contact de collision (K1, K2) avec l'enveloppe de protection contre les collisions (20), un changement de position du coulisseau (25) peut être détecté par au moins un des deux moyens de détection de position (41, 42) ; ainsi que
- pour la reprise de l'entraînement d'outil (12) lorsque le moyen de réglage d'outil (110) est activé, il est prévu un moyen de libération d'outil (115) pour l'acquittement de la panne, le moyen de libération d'outil (115) pouvant être actionné par une personne (200).

2. Outil (10) selon la revendication 1, **caractérisé en ce que** le premier moyen de détection de position (41) et le deuxième moyen de détection de position (42) sont conçus pour détecter simultanément et de manière redondante un changement de position du coulisseau (25) dans la direction de l'axe (14), sachant que, dans le cas, si le changement de position du coulisseau (25) n'est détecté que par l'un des deux moyens de détection de position (41, 42), le dispositif de commande à mémoire programmable (50) bloque un moyen de libération d'outil (115) pour l'acquittement de la panne jusqu'à ce qu'une panne du dispositif anti-collision (40) soit éliminée.

3. Outil (10) selon l'une des revendications 1 ou 2, **caractérisé en ce que** les deux moyens de détection de position (41, 42) du dispositif anticollision (40) sont un premier capteur de surveillance (44), de préférence un premier capteur de surveillance inductif (44), et un deuxième capteur de surveillance (45), de préférence un deuxième capteur de surveillance inductif (45).

4. Outil (10) selon l'une des revendications 1 à 3, **caractérisé en ce que** l'insert d'outil (35) est choisi dans le groupe constitué par : Embout de vissage (39), foret, fraise.

5. Outil (10) selon l'une des revendications 1 à 4, **caractérisé en ce que** l'outil (10) est un outil de vissage d'alimentation (11) avec un embout de vissage (39) en tant qu'insert d'outil (35), la gaine anti-collision (20) étant configurée sous la forme d'une embouchure de mâchoire (21) avec au moins deux mâchoires (22), les mâchoires (22) étant fixées de manière élastique par des ressorts de mâchoire (23) sur un corps de déviation (24) et le corps de déviation (24) étant relié à un tuyau de transport (17) pour l'amenée de vis individuelles (18) à l'embouchure de mâchoire (21).

6. Outil (10) selon la revendication 5, **caractérisé en ce que** l'embout de vissage (39) est conçu pour pousser une vis (18) dans la direction axiale (14) à l'intérieur de l'embouchure de mâchoire (21) vers l'extrémité libre (19) de l'outil (10) lorsqu'une opération de vissage est déclenchée, et les mâchoires (22) sont conçues à cet effet, de maintenir élastiquement la vis (18) au niveau de sa tête de vis ainsi que de sa tige de vis jusqu'à ce que la vis (18) soit vissée dans une pièce à usiner (180) et que les mâchoires (22) de l'embouchure de mâchoire (21) libèrent la tête de vis.

7. Robot collaborateur (120) avec un bras de robot mobile (121, 122), ainsi qu'avec un outil (10) fixé sur un porte-outil (125) selon l'une des revendications 1 à 6, dans lequel le dispositif anticollision (40) de l'outil (10) est relié par signal (46) à un dispositif de commande programmable (150) du robot (120) et, en cas de contact de collision (K1, K2) avec l'enveloppe de protection contre les collisions (20) de l'outil (10), le porte-outil (125) du robot (120) s'écarte (135) d'une position de travail (130) dans une position de perturbation (140) plus éloignée de l'endroit du contact de collision (K1, K2), **caractérisé en ce que**, pour la reprise du fonctionnement du robot (120), il est prévu un moyen de libération du robot (165) pour la confirmation de la perturbation, le moyen de libération du robot (165) pouvant être actionné par une personne (200).

8. Robot collaborateur (120) selon la revendication 7, **caractérisé en ce que** le robot (120), après un contact de collision (K1, K2) avec l'enveloppe anti-collision (20) de l'outil (10), reste dans sa position de perturbation (140) plus éloignée de l'endroit du contact de collision (K1, K2).

9. Robot collaborateur (120) selon la revendication 7 ou 8, **caractérisé en ce que** l'automate programmable (50) de l'outil (10) coopère avec l'automate programmable (150) du robot (120) et est de préférence intégré à ce dernier (150).

10. Robot collaborateur (120) selon l'une des revendications 7 à 9, **caractérisé en ce que** le dispositif de commande à mémoire programmable (50) de l'outil (10) et/ou le dispositif de commande à mémoire programmable (150) du robot (120) vérifie régulièrement le bon fonctionnement du premier (41) et du deuxième (42) moyen de détection de position ainsi que du contrôle à deux canaux (43) du dispositif anti-collision (40).

11. Robot collaborateur (120) selon l'une des revendications 7 à 10, **caractérisé en ce que**, en cas de dysfonctionnement du dispositif anti-collision (40) de l'outil (10), le moyen de libération du robot (165) est bloqué pour acquitter le dysfonctionnement jusqu'à ce que le dysfonctionnement du dispositif anti-collision (40) soit corrigé.

12. Procédé anti-collision d'arrêt sécurisé en cas de contact de collision d'un robot collaborateur (120) selon l'une des revendications 7 à 11, mobile de manière commandée sur un poste de travail collaboratif (100), avec un outil (10) selon l'une des revendications 1 à 6, fixé sur un porte-outil (125) d'un bras mobile (121, 122) du robot (120), comprenant les étapes suivantes :
- détection d'un contact de collision (K1, K2) avec une enveloppe anti-collision (20) qui est disposée à une extrémité libre (19) de l'outil (10) coaxialement à la direction axiale (14) d'un insert d'outil (35) et qui est montée mobile par rapport à un boîtier d'outil (15) et couplée en mouvement à un coulisseau (25) monté mobile dans la direction axiale (14) ;
- transmission mécanique du mouvement de déviation de l'enveloppe anti-collision (20) provoqué par le contact de collision (K1, K2) en un changement de position dans la direction axiale (14) du coulisseau (25) ;
- détection du changement de position du coulisseau (25) par au moins l'un des deux moyens de détection de position (41, 42) d'un dispositif anti-collision (40) ;
- activation d'un moyen d'arrêt d'outil (110) pour arrêter l'entraînement d'outil (12) par le dispositif anti-collision (40), un support d'insert d'outil (30) étant ramené dans sa position de base (31) et l'insert d'outil (35) se trouvant dans cette position de base (31) à l'intérieur de l'enveloppe anti-collision (20) ;
- l'évitement (135) du porte-outil (125) du robot (120), y compris l'outil (10) qui y est fixé, d'une position de travail (130) vers une position de perturbation (140) plus éloignée de l'endroit du contact de collision (K1, K2) ;
**caractérisé en ce qu'**après un contact de collision (K1, K2) avec l'enveloppe de protection contre les collisions (20) de l'outil (10), le robot (120) reste dans sa position de perturbation (140) plus éloignée de l'endroit du contact de collision (K1, K2) jusqu'à ce que, pour la reprise du fonctionnement du robot (120), un moyen de libération du robot (165) soit actionné pour l'acquittement de la perturbation.
